# EUROPEAN PATENT SPECIFICATION

(11) **EP 1 371 265 B1**
(45) Date of publication and mention of the grant of the patent: **07.01.2009**
(21) Application number: 01958537.1
(22) Date of filing: 27.08.2001
(51) Int. Cl.: H04S 1/00

(54) **SIGNAL PROCESSING APPARATUS, SIGNAL PROCESSING METHOD, PROGRAM AND RECORDING MEDIUM**
SIGNALVERARBEITUNGSANORDNUNG,SIGNALVERARBEITUNGSVERFAHREN,PROGRAMM UND AUFNAHMEMEDIUM
DISPOSITIF DE TRAITEMENT DU SIGNAL, METHODE DE TRAITEMENT DU SIGNAL, PROGRAMME ET SUPPORT D'ENREGISTREMENT

(30) Priority: 29.08.2000 JP 2000258533
(43) Date of publication of application: 17.12.2003
(73) Proprietor: Panasonic Corporation, Kadoma-shi Osaka 571-8501 (JP)
(72) Inventor: KATAYAMA, Takashi, Hirakata-shi, Osaka 573-0071 (JP); MATSUMOTO, Masaharu, Katano-shi, Osaka 576-0015 (JP); SUEYOSHI, Masahiro, Hirakata-shi, Osaka 573-0171 (JP); NISHIO, Kosuke, Moriguchi-shi, Osaka 570-0032 (JP); FUJITA, Takeshi, Takatsuki-shi, Osaka 569-1044 (JP); KAWAMURA, Akihisa, Hirakata-shi, Osaka 573-0093 (JP); ABE, Kazutaka, Toyonaka-shi, Osaka 560-0003 (JP)
(74) Representative: Balsters, Robert
(86) International application number: PCT/JP2001/007341
(87) International publication number: WO 2002/019767

(56) References cited:
- EP-A- 0 896 498
- PATENT ABSTRACTS OF JAPAN vol. 1998, no. 05, 30 April 1998 (1998-04-30) -& JP 10 021648 A (TOSHIBA CORP), 23 January 1998 (1998-01-23)
- PATENT ABSTRACTS OF JAPAN vol. 1995, no. 11, 26 December 1995 (1995-12-26) -& JP 07 221717 A (GRAPHICS COMMUN LAB:KK), 18 August 1995 (1995-08-18)

## Description

### TECHNICAL FIELD

The present invention relates to a signal processing apparatus and a signal processing method for converting multi-channel digital audio signals into analog audio signals and outputting the analog audio signals; a program for executing signal processing; and a recording medium used for recording the program.

### BACKGROUND ART

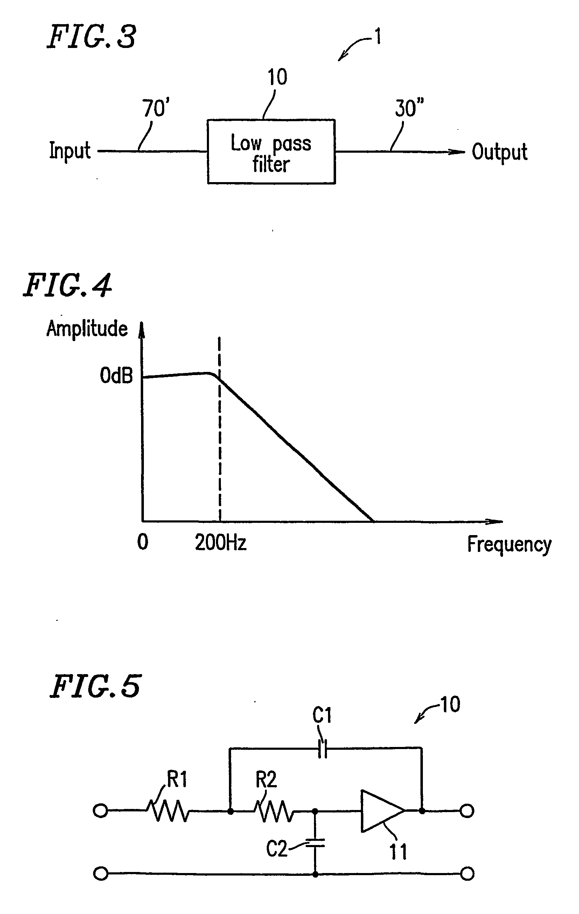

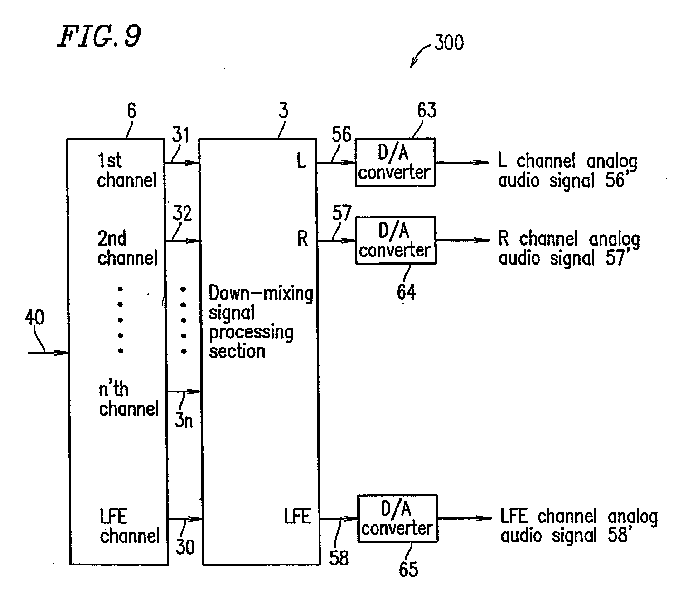

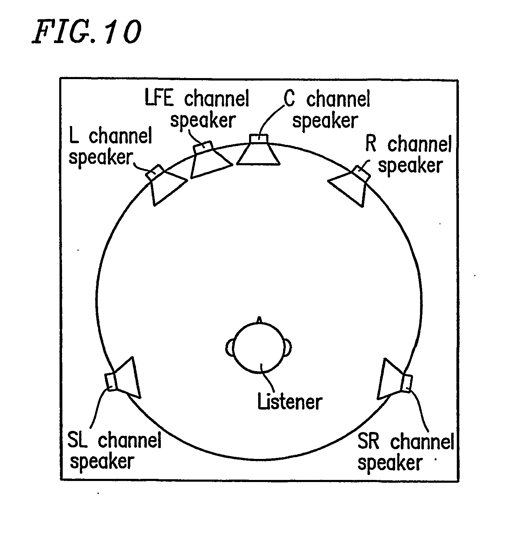

A conventional signal processing apparatus **300** for converting multi-channel digital audio signals into analog signals and outputting the analog signals will be described with reference to Figures **9****,** **10** and **11****.** The signal processing apparatus **300** is incorporated in, for example, a DVD-Video player. Document EP 0 896 498 shows a multichannel audio reproduction system incorporating a conventional converting signal processing apparatus. The DVD-Video standards support reproduction of multi-channel audio signals up to 5.1 channels. Figure **10** shows the arrangement of a 5 .1 channel speaker unit. 5.1 channels means, as shown in Figure **10****,** 5 channels including a left forward (L: left), center forward (C: center), right forward (R: right), left surround (LS), and right surround (RS) channel, and one channel of a low frequency effect channel (LFE).

Figure **9** shows a structure of the signal processing apparatus **300.** According to the DVD-Video standards, a 5.1 channel audio bit stream signal **40** is input to the signal processing apparatus **300.** A decoder **6** receives the audio bit stream signal **40** and decodes the audio bit stream signal **40** into a digital audio signal (linear PCM). Then, the audio bit stream signal **40** separates the digital audio signal into a digital audio signal **31** of a first channel (a first channel digital audio signal **31)**, a digital audio signal **32** of a second channel (a second channel digital audio signal **32),** ... a digital audio signal **3n** of an n'th (n≥2) channel (an n' th channel digital audio signal **3n),** and a digital audio signal **30** of an LFE channel (an LFE channel digital audio signal **30).** In the case of the **5.1** channel system, n=5. A down-mixing signal processing section **3** receives resultant digital audio signals **30, 31,** ... **3n** and performs down-mixing signal processing.

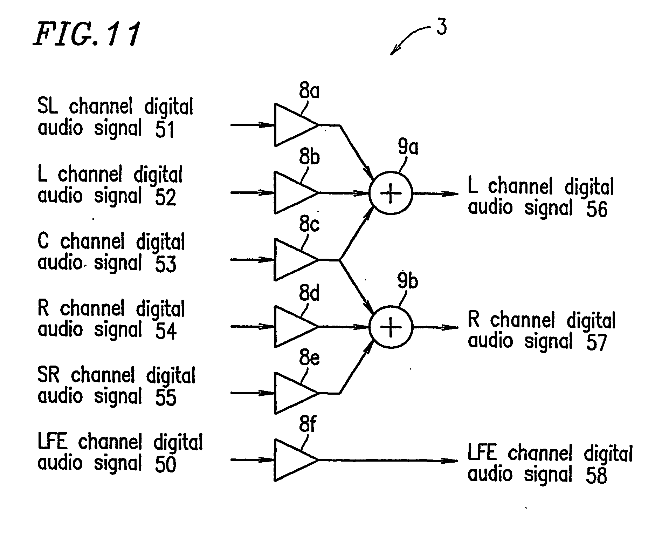

Down-mixing signal processing can be performed in various manners. In the case of the 5.1 channel system, down-mixing signal processing can be performed, for example, as shown in Figure **11****.** The down-mixing signal processing section **3** down-mixes the digital audio signals of 5.1 channels of L, R, C, SL, SR and LFE channels to 2.1 channels of L, R and LFE. In Figure **11****,** digital audio signals of the SL, L, C, R, SR and LFE channels are indicated by reference numerals **51, 52, 53, 54, 55** and **50.** The down-mixing signal processing section **3** includes multipliers **8a, 8b, 8c, 8d, 8e** and **8f** and adders **9a** and **9b.** Multiplication coefficients of the multipliers **8a, 8b, 8c, 8d, 8e** and **8f** are respectively m1, m2, m3, m4, m5 and m6. The multiplier **8a** multiplies the SL channel digital audio signal **51** with the multiplication coefficient m1. The multiplier **8b** multiplies the L channel digital audio signal **52** with the multiplication coefficient m2. The multiplier **8c** multiplies the C channel digital audio signal **53** with the multiplication coefficient m3. The multiplier **8d** multiplies the R channel digital audio signal **54** with the multiplication coefficient m4. The multiplier **8e** multiplies the SR channel digital audio signal **55** with the multiplication coefficient m5. The multiplier **8f** multiplies the LFE channel digital audio signal **50** with the multiplication coefficient m6. The digital audio signals **51** through **55** and **50** respectively correspond to the digital audio signals **31, 32,** ... **3n** and **30** shown in Figure **9****.**

The adder **9a** adds output signals from the multipliers **8a, 8b** and **8c,** and outputs a digital audio signal **56** of an L channel (an L channel digital audio signal **56).** The adder **9b** adds output signals from the multipliers **8c, 8d** and **8e,** and outputs a digital audio signal **57** of an R channel (an R channel digital audio signal **57).** The multiplier **8f** outputs a digital audio signal **58** of an LFE channel (an LFE channel digital audio signal **58).**

An exemplary general ratio of the multiplication coefficients is m1:m2:m3:m4:m5:m6 = 0.7:1.0:0.7:1.0:0.7:1.0. The ratio of the multiplication coefficients is changeable in accordance with characteristics of the input signal or the system. In the case where a signal which is to be input to the down-mixing signal processing section 3 is level-adjusted so as to avoid an overflow, the ratio of the multiplication coefficients can be the above-mentioned ratio. In the case where there is a possibility that down-mixing signal processing causes an overflow, the multiplication coefficients m1 through m6 need to be regulated in advance. In the case where the LFE, SL, L, C, R and SR channel digital audio signals **50, 51, 52, 53, 54** and **55** are not processed against an overflow, all the multiplication coefficients m1 through m6 further need to be regulated with 1/(2.4).

The L, R and LFE channel digital audio signals **56, 57** and **58** obtained by down-mixing signal processing are given to D/A converters **63, 64** and **65** shown in Figure **9**. The D/A converter **63** converts the L channel digital audio signal **56** into an analog audio signal **56'** of an L channel (an L channel analog audio signal **56')** and outputs the L channel analog audio signal **56'.** The D/A converter **64** converts the R channel digital audio signal **57** into an analog audio signal **57'** of an R channel (an R channel analog audio signal **57')** and outputs the R channel analog audio signal **57'.** The D/A converter **65** converts the LFE channel digital audio signal **58** into an analog audio signal **58'** of an LFE channel (an LFE channel analog audio signal **58')** and outputs the LFE channel analog audio signal **58'.**

One D/A converter is required for each channel. Therefore, the signal processing apparatus **300** shown in Figure **9** requires three D/A converters **63, 64** and **65.** In most of the actual products, however, two D/A converters are packaged into one LSI. Where two such LSIs are incorporated into the signal processing apparatus **300,** one D/A converter is not used. In addition, the D/A converters used for DVD players are mostly expensive in order to provide high quality sound.

When a user reproduces video or audio data using a DVD player, he/she often uses a speaker unit which is not of a surround system. Often times, he/she does not use the LFE channel. In a portable DVD player, a headphone speaker is often used for outputting the audio data, in which case, the LFE channel is not used. Furthermore, the output from the DVD player is often reproduced by a general TV receiver. A speaker unit of most of the TV receivers have only an L channel and an R channel and is not of a surround system. The LFE channel is not used.

In the conventional signal processing apparatus, one D/A converter is provided for each channel for converting a digital signal into an analog signal although often times the LFE channel is not used. In the case of a 2.1 channel output system, three D/A converters are required, which unnecessarily increases the cost.

### DISCLOSURE OF THE INVENTION

According to one aspect of the invention, a signal processing apparatus includes a decoder for decoding a stream signal so as to generate a digital audio signal of a low frequency effect channel and digital audio signals of first through n'th (n≥2) channels, wherein the stream signal includes information of a low frequency effect channel, the information containing a low frequency component, and also includes information of the first through n'th channels, the information containing components of all frequency bands, the first through n'th channels having different sound source positions; an adder section for adding the digital audio signal of the low frequency effect channel and the digital audio signal of a specified channel among the first through n'th channels, so as to generate an addition signal; an n number of D/A conversion sections for converting the digital audio signals of the first through n'th channels, excluding the digital audio signal of the specified channel, and the addition signal into n types of analog audio signals; a first signal processing section for performing a first signal processing process of the analog audio signal obtained as a result of D/A conversion of the addition signal, so as to generate an analog audio signal of the low frequency effect channel; and a second signal processing section for performing a second signal processing process of the analog audio signal obtained as a result of D/A conversion of the addition signal, so as to generate an analog audio signal of the specified channel.

In one embodiment of the invention, the signal processing apparatus further includes a multiplication section for adjusting an amplitude of the digital audio signal of the low frequency effect channel generated by the decoder.

In one embodiment of the invention, the signal processing apparatus further includes a multiplication section for adjusting an amplitude of the digital audio signal of the specified channel generated by the decoder.

In one embodiment of the invention, the first signal processing process is a low pass filtering process.

In one embodiment of the invention, the second signal processing process is one of a high pass filtering process or an all pass filtering process.

In one embodiment of the invention, the second signal processing section includes a switching section for selecting one of the high pass filtering process and the all pass filtering process. The all pass filtering process is selected when a low frequency analog audio signal is output from the second signal processing section, and the high pass filtering process is selected when the low frequency analog audio signal is not output from the second signal processing section.

In one embodiment of the invention, n is 5, and the stream signal contains information of 5.1 channels.

According to another aspect of the invention, a signal processing apparatus includes a decoder for decoding a stream signal so as to generate a digital audio signal of a low frequency effect channel and digital audio signals of first through n'th (n≥2) channels, wherein the stream signal includes information of a low frequency effect channel, the information containing a low frequency component, and also includes information of the first through n'th channels, the information containing components of all frequency bands, the first through n'th channels having different sound source positions; a down-mixing signal processing section for converting the digital audio signals of the first through n'th channels into a digital audio signal of an L channel and a digital audio signal of an R channel; a first addition section for adding the digital audio signal of the low frequency effect channel and the digital audio signal of the L channel, so as to generate a first addition signal; a second addition section for adding the digital audio signal of the low frequency effect channel and the digital audio signal of the R channel, so as to generate a second addition signal; a first D/A conversion section for converting the first addition signal into a first analog audio signal; a second D/A conversion section for converting the second addition signal into a second analog audio signal; a third addition section for adding the first analog audio signal and the second analog audio signal so as to generate a third analog audio signal; a first signal processing section for performing a first signal processing process of the third analog audio signal so as to generate a fourth analog audio signal of the low frequency effect channel; a second signal processing section for performing a second signal processing process of the first analog audio signal so as to generate a fifth analog audio signal of the L channel; and a third signal processing section for performing third signal processing of the second analog audio signal so as to generate a sixth analog audio signal of the R channel.

In one embodiment of the invention, the signal processing apparatus further includes a multiplication section for adjusting an amplitude of the digital audio signal of the low frequency effect channel.

In one embodiment of the invention, the signal processing apparatus further includes a multiplication section for adjusting an amplitude of the digital audio signal of the L channel generated by the down-mixing signal processing section.

In one embodiment of the invention, the signal processing apparatus further includes a multiplication section for adjusting an amplitude of the digital audio signal of the R channel generated by the down-mixing signal processing section.

In one embodiment of the invention, the first signal processing process is a low pass filtering process.

In one embodiment of the invention, the second signal processing process is one of a high pass filtering process or an all pass filtering process.

In one embodiment of the invention, the second signal processing section includes a switching section for selecting one of the high pass filtering process and the all pass filtering process. The all pass filtering process is selected when a low frequency analog audio signal is output from the second signal processing section, and the high pass filtering process is selected when the low frequency analog audio signal is not output from the second signal processing section.

In one embodiment of the invention, the third signal processing is one of a high pass filtering process or an all pass filtering process.

In one embodiment of the invention, the third signal processing section includes a switching section for selecting one of the high pass filtering process and the all pass filtering process. The all pass filtering process is selected when a low frequency analog audio signal is output from the third signal processing section, and the high pass filtering process is selected when the low frequency analog audio signal is not output from the third signal processing section.

In one embodiment of the invention, n is 5, and the stream signal contains information of 5.1 channels.

According to still another aspect of the invention, a signal processing method includes the steps of decoding a stream signal so as to generate a digital audio signal of a low frequency effect channel and digital audio signals of first through n'th (n≥2) channels, wherein the stream signal includes information of a low frequency effect channel, the information containing a low frequency component, and also includes information of the first through n'th channels, the information containing components of all frequency bands, the first through n'th channels having different sound source positions; adding the digital audio signal of the low frequency effect channel and the digital audio signal of a specified channel among the first through n'th channels, thereby generating an addition signal; converting the digital audio signals of the first through n' th channels, excluding the digital audio signal of the specified channel, and the addition signal into n types of analog audio signals; performing a first signal processing process of the analog audio signal obtained as a result of D/A conversion of the addition signal, thereby generating an analog audio signal of the low frequency effect channel; and performing a second signal processing process of the analog audio signal obtained as a result of D/A conversion of the addition signal, thereby generating an analog audio signal of the specified channel.

According to still another aspect of the invention, a signal processing method includes the steps of decoding a stream signal so as to generate a digital audio signal of a low frequency effect channel and digital audio signals of first through n'th (n≥2) channels, wherein the stream signal includes information of a low frequency effect channel, the information containing a low frequency component, and also includes information of the first through n'th channels, the information containing components of all frequency bands, the first through n'th channels having different sound source positions; down-mixing the digital audio signals of the first through n'th channels into a digital audio signal of an L channel and a digital audio signal of an R channel; adding the digital audio signal of the low frequency effect channel and the digital audio signal of the L channel, thereby generating a first addition signal; adding the digital audio signal of the low frequency effect channel and the digital audio signal of the R channel, thereby generating a second addition signal; converting the first addition signal into a first analog audio signal; converting the second addition signal into a second analog audio signal; adding the first analog audio signal and the second analog audio signal, thereby generating a third analog audio signal; performing a first signal processing process of the third analog audio signal, thereby generating a fourth analog audio signal of the low frequency effect channel; performing a second signal processing process'of the first analog audio signal, thereby generating a fifth analog audio signal of the L channel; and performing third signal processing of the second analog audio signal, thereby generating a sixth analog audio signal of the R channel.

According to still another aspect of the invention, a program for causing a computer to execute signal processing for converting a digital audio signal into an analog audio signal is provided. The signal processing includes the steps of decoding a stream signal so as to generate a digital audio signal of a low frequency effect channel and digital audio signals of first through n' th (n≥2) channels, wherein the stream signal includes information of a low frequency effect channel, the information containing a low frequency component, and also includes information of the first through n'th channels, the information containing components of all frequency bands, the first through n'th channels having different sound source positions; adding the digital audio signal of the low frequency effect channel and the digital audio signal of a specified channel among the first through n'th channels, thereby generating an addition signal; converting the digital audio signals of the first through n'th channels, excluding the digital audio signal of the specified channel, and the addition signal into n types of analog audio signals; performing a first signal processing process of the analog audio signal obtained as a result of D/A conversion of the addition signal, thereby generating an analog audio signal of the low frequency effect channel; and performing a second signal processing process of the analog audio signal obtained as a result of D/A conversion of the addition signal, thereby generating an analog audio signal of the specified channel.

According to still another aspect of the invention, a program for causing a computer to execute signal processing for converting a digital audio signal into an analog audio signal is provided. The signal processing includes the steps of decoding a stream signal so as to generate a digital audio signal of a low frequency effect channel and digital audio signals of first through n' th (n≥2) channels, wherein the stream signal includes information of a low frequency effect channel, the information containing a low frequency component, and also includes information of the first through n'th channels, the information containing components of all frequency bands, the first through n'th channels having different sound source positions; down-mixing the digital audio signals of the first through n'th channels into a digital audio signal of an L channel and a digital audio signal of an R channel; adding the digital audio signal of the low frequency effect channel and the digital audio signal of the L channel, thereby generating a first addition signal; adding the digital audio signal of the low frequency effect channel and the digital audio signal of the R channel, thereby generating a second addition signal; converting the first addition signal into a first analog audio signal; converting the second addition signal into a second analog audio signal; adding the first analog audio signal and the second analog audio signal, thereby generating a third analog audio signal; performing a first signal processing process of the third analog audio signal, thereby generating a fourth analog audio signal of the low frequency effect channel; performing a second signal processing process of the first analog audio signal, thereby generating a fifth analog audio signal of the L channel; and performing third signal processing of the second analog audio signal, thereby generating a sixth analog audio signal of the R channel.

According to still another aspect of the invention, a computer-readable recording medium having a program, recorded thereon, for causing a computer to execute signal processing for converting a digital audio signal into an analog audio signal is provided. The signal processing includes the steps of decoding a stream signal so as to generate a digital audio signal of a low frequency effect channel and digital audio signals of first through n' th (n≥2) channels, wherein the stream signal includes information of a low frequency effect channel, the information containing a low frequency component, and also includes information of the first through n'th channels, the information containing components of all frequency bands, the first through n'th channels having different sound source positions; adding the digital audio signal of the low frequency effect channel and the digital audio signal of a specified channel among the first through n'th channels, thereby generating an addition signal; converting the digital audio signals of the first through n'th channels, excluding the digital audio signal of the specified channel, and the addition signal into n types of analog audio signals ; performing a first signal processing process of the analog audio signal obtained as a result of D/A conversion of the addition signal, thereby generating an analog audio signal of the low frequency effect channel; and performing a second signal processing process of the analog audio signal obtained as a result of D/A conversion of the addition signal, thereby generating an analog audio signal of the specified channel.

According to still another aspect of the invention, a computer-readable recording medium having a program, recorded thereon, for causing a computer to execute signal processing for converting a digital audio signal into an analog audio signal is provided. The signal processing includes the steps of decoding a stream signal so as to generate a digital audio signal of a low frequency effect channel and digital audio signals of first through n'th (n≥2) channels, wherein the stream signal includes information of a low frequency effect channel, the information containing a low frequency component, and also includes information of the first through n'th channels, the information containing components of all frequency bands, the first through n'th channels having different sound source positions; down-mixing the digital audio signals of the first through n'th channels into a digital audio signal of an L channel and a digital audio signal of an R channel; adding the digital audio signal of the low frequency effect channel and the digital audio signal of the L channel, thereby generating a first addition signal; adding the digital audio signal of the low frequency effect channel and the digital audio signal of the R channel, thereby generating a second addition signal; converting the first addition signal into a first analog audio signal; converting the second addition signal into a second analog audio signal; adding the first analog audio signal and the second analog audio signal, thereby generating a third analog audio signal; performing a first signal processing process of the third analog audio signal, thereby generating a fourth analog audio signal of the low frequency effect channel; performing a second signal processing process of the first analog audio signal, thereby generating a fifth analog audio signal of the L channel; and performing third signal processing of the second analog audio signal, thereby generating a sixth analog audio signal of the R channel.

The invention described herein makes possible the advantages of providing (1) a signal processing apparatus and a signal processing method for reproducing multi-channel audio signals with a low cost circuit configuration as a result of reducing the number of D/A converters used for converting multi-channel digital audio signals into analog audio signals, and for assigning a channel for outputting an analog audio signal of an LFE channel; and (2) a program for executing such signal processing and a recording medium used for recording the program.

These and other advantages of the present invention will become apparent to those skilled in the art upon reading and understanding the following detailed description with reference to the accompanying figures.

### BRIEF DESCRIPTION OF THE DRAWINGS

Figure **1A** shows a structure of a signal processing apparatus according to a first example of the present invention;
Figure **1B** is a flowchart illustrating a signal processing method according to the first example;
Figure **2A** shows a structure of a signal processing apparatus according to a second example of the present invention;
Figure **2B** is a flowchart illustrating a signal processing method according to the second example;
Figure **2C** shows a structure of a computer used for executing a signal processing method according to the present invention;
Figure **3** shows a structure of a first signal processing section of a signal processing apparatus according to the present invention;
Figure **4** is a graph illustrating a frequency characteristic of the first signal processing section shown in Figure **3****;**
Figure **5** shows a circuit configuration of the first signal processing section shown in Figure 3 which is realized by an analog circuit;
Figure **6** shows a structure of a second signal processing section of a signal processing apparatus according to the present invention;
Figure **7** is a graph illustrating a frequency characteristic of the second signal processing section shown in Figure **6****;**
Figure **8** shows a circuit configuration of the second signal processing section shown in Figure 6 which is realized by an analog circuit;
Figure **9** shows a structure of a conventional signal processing apparatus;
Figure **10** shows an arrangement of a speaker unit of a multi-channel system; and
Figure **11** shows down-mixing signal processing procedure used by the conventional signal processing apparatus and a signal processing apparatus according to the present invention.

### BEST MODE FOR CARRYING OUT THE INVENTION

Hereinafter, the present, invention will be described by way of illustrative examples with reference to the accompanying drawings. Identical elements in different examples bear identical reference numerals.

### (Example 1)

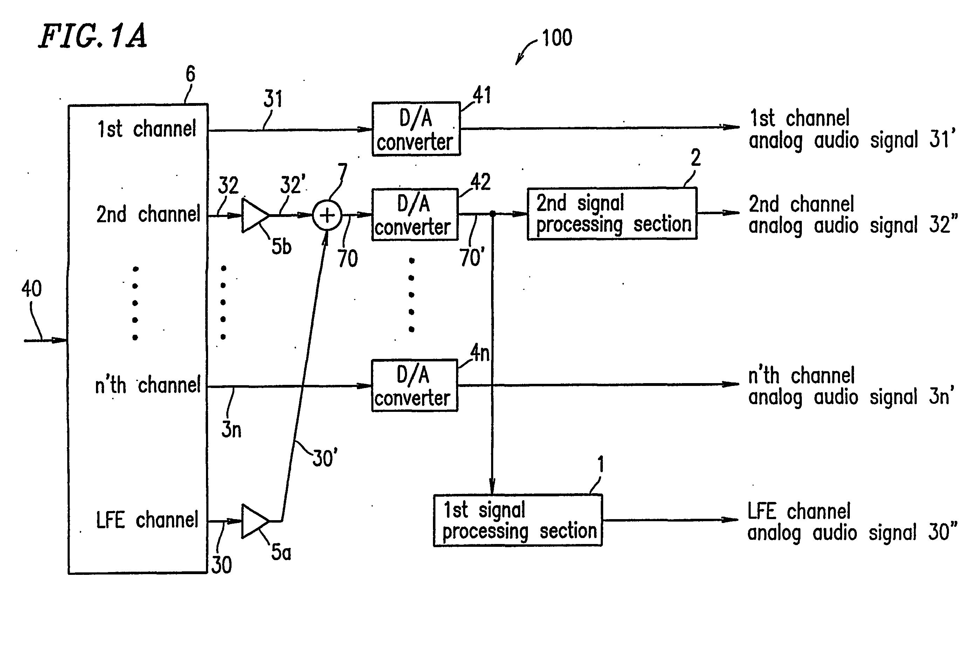

Figure **1A** shows a signal processing apparatus **100** according to a first example of the present invention. The signal processing apparatus **100** includes a first signal processing section **1,** a second signal processing section **2,** D/A converters **41, 42,** ... **4n,** multipliers **5a** and **5b,** a decoder **6** and an adder **7.**

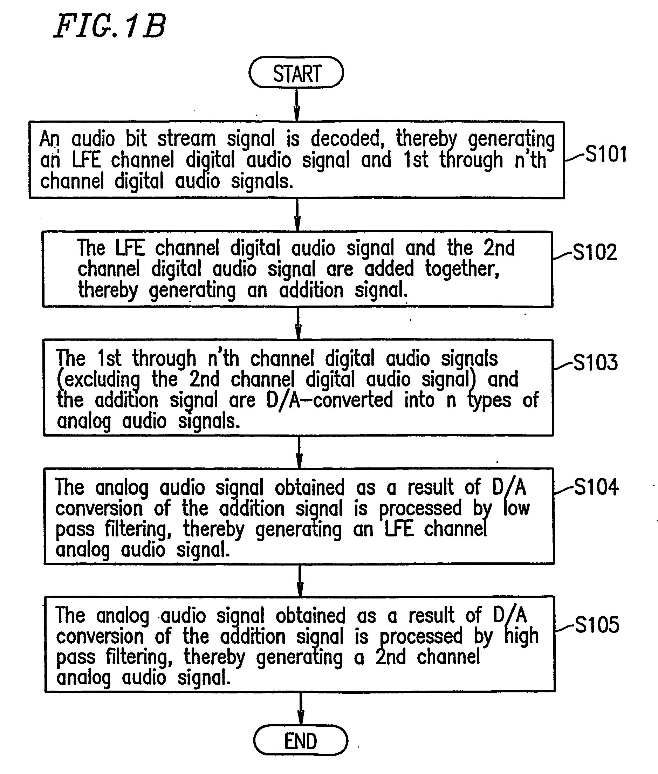

Figure **1B** is a flowchart illustrating an operation of the signal processing apparatus **100** shown in Figure **1A****.**

The operation of the signal processing apparatus **100** will be described with reference to Figure **1B****.**

S101: The decoder **6** receives an audio bit stream signal **40** from an external device. The audio bit stream signal **40** includes information of an LFE channel, the information containing a low frequency component, and information of first through n'th (n≥2) channels, the information containing components of all the frequency bands. The first through n'th channels have different sound source positions. The decoder **6** decodes the audio bit stream signal **40** into a digital audio signal (linear PCM). Then, decoder **6** separates the digital audio signal into a digital audio signal **31** of a first channel (a first channel digital audio signal **31),** a digital audio signal **32** of a second channel (a second channel digital audio signal **32),** ... a digital audio signal **3n** of an n' th channel (an n'th channel digital audio signal **3n),** and a digital audio signal **30** of an LFE channel (an LFE channel digital audio signal **30).** In the first and second examples of the present invention, reference numeral **"3n"** can be any number in the range of 33 through 39. According to the present invention, the number of the channels is any integer of two or greater.

The multiplier **5a** multiplies the LFE channel digital audio signal **30** with a multiplication coefficient M1 and outputs a digital audio signal **30'.** The multiplier **5b** multiplies the second channel digital audio signal **32** with a multiplication coefficient M2 and outputs a digital audio signal **32'.** The second channel is defined as a specified channel.

S102: The adder **7** adds the digital audio signal **30'** and the digital audio signal **32',** and outputs a digital audio signal **70** as an addition signal.

S103: The D/A converter **42** converts the digital audio signal **70** into an analog audio signal **70'.** The D/A converters **41** through **4n** (excluding the D/A converter **42)** respectively convert the first through n'th digital audio signals **31** through **3n** (excluding the second digital audio signal **32)** into (n-1) types of analog audio signals **31'** through **3n'** (excluding **32').**

S104: The first signal processing section **1** includes a low pass filter (LPF; not shown in Figure **1A****),** and thus performs low pass filtering of the analog audio signal **70'** so as to extract a low frequency component. Then, the first signal processing section **1** outputs an analog audio signal **30"** of an LFE channel (an LFE channel analog audio signal **30").**

S105: The second signal processing section **2** includes a high pass filter (HPF; not shown in Figure **1A****),** and thus performs high pass filtering of the analog audio signal **70'** so as to extract a high frequency component. Then, the second signal processing section **2** outputs an analog audio signal **32"** of the second channel (a second channel analog audio signal **32").**

The operation of the signal processing apparatus **100** will be described in more detail.

The audio bit stream signal **40** contains multi-channel information. The multi-channel information includes information of the LFE channel for reproducing a low frequency component and information of general channels for reproducing frequency components of all the frequency bands. In the case where the number of channels is 5.1, the number of general channels is 5. The information of the LFE channel mainly contains a low frequency component as a frequency component, but can substantially contain only the low frequency component. The frequency band for a low frequency component is defined for each coding system. For example, the frequency band for a low frequency component is 120 Hz or lower in the case of the Dolby Digital system, and 240 Hz or lower in the case of the DTS (Digital Theater Systems). The information of the first through n'th channel contains the information of all the frequency bands to be reproduced which are defined for each coding system. The information of the first through n'th channel contains at least a component of a frequency band which is equal to or higher than the frequency band having a low frequency component.

In the first example, the first through n'th channel are general channels. In the following description, n=5, the first channel is an L channel, the second channel is a C channel, the third channel is an R channel, the fourth channel is an SL channel, and the fifth channel is an SR channel. In the first example, the specified channel signal which is added with the signal of the LFE channel is the second channel signal, but a similar effect is obtained whichever channel signal is added with the signal of the LFE channel. The LFE channel signal can be added to signals of a plurality of general channels.

As described above, the audio bit stream signal **40** of the 5.1 channels is decoded by the decoder **6** and separated into the first through fifth channel digital audio signals **31** through **35** and the LFE channel digital audio signal **30.** Also described above, the LFE channel digital audio signal **30** is multiplied with the multiplication coefficient M1 by the multiplier **5a,** and the second channel digital audio signal **32** is multiplied with the multiplication coefficient M2 by the multiplier **5b.** The values of M1 and M2 are arbitrarily determined in each embodiment of the present invention. The digital audio signals **30'** and **32'** obtained by the multiplication are added together by the adder 7.

The second channel digital audio signal **32** may possibly contain a signal of a frequency component which is the same as the low frequency component . Therefore, the multiplication coefficients M1 and M2 are preferably determined so that the addition result obtained by the adder **7** does not overflow.

In the case where the amplitudes of the second channel digital audio signal **32** and the LFE channel digital audio signal **30** are adjusted by the decoder **6** or the like in order to avoid an overflow, the multipliers **5a** and **5b** can be eliminated.

The digital audio signal **70** obtained as a result of the addition of the digital audio signal **30** and the digital audio signal **32** by the adder **7** is input to the D/A converter **42** and converted into the analog audio signal **70'.** In parallel, the first through fifth channel digital audio signals **31** through **35** (excluding the second channel digital audio signal **32)** are respectively input to the D/A converters **41** through **45** (excluding the D/A converter **42)** and converted into analog audio signals **31'** through **35'** (excluding **32').**

The analog audio signals **31'** through **35'** (excluding **32')** are output without being processed. The analog audio signal **70'** from the D/A converter **42** is input to the first signal processing section **1** and the second signal processing section **2.**

Figure **3** shows a structure of the first signal processing section **1.** The first signal processing section **1** includes a low pass filter (LPF) **10** shown in Figure **3.** Figure **4** shows an exemplary frequency characteristic of the LPF **10.** When realized by an analog circuit, the LPF **10** has a circuit configuration shown in Figure **5****.** The LPF **10** includes an operational amplifier **11,** resistors **R1** and **R2,** and capacitors **C1** and **C2.** The capacitor **C1** is provided in a feedback section.

The first signal processing section **1** extracts a low frequency component from the analog audio signal **70'** using the LPF **10** described above, and outputs the LFE channel analog audio signal **30".** More specifically, the LPF **10** removes a high frequency component (a frequency component of about 200 Hz or higher shown in Figure **4****)** of the analog audio signal **70'.** In this specification, removal of a high frequency component includes attenuation of the high frequency component. The frequency component which is removed by the LPF **10** is preferably a frequency component of about 200 Hz or higher, but is not limited to this. An input section or an output section of the LPF **10** of the first signal processing section **1** can include a level adjuster.

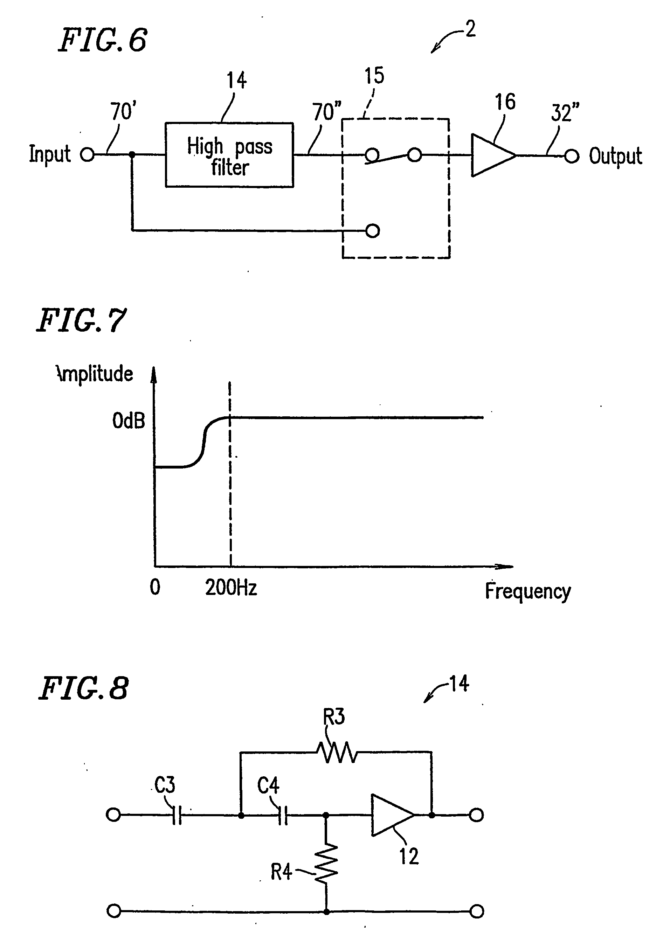

The second signal processing section **2** generates the second channel analog audio signal **32"** from the analog audio signal **70'** in accordance with the values of the multiplication coefficients M1 and M2. Figure **6** shows a structure of the second processing section **2.** As shown in Figure **6****,** the second processing section **2** includes a high pass filter (HPF) **14,** an output switch **15,** and a multiplier **16.** Figure **7** shows an exemplary characteristic of the HPF **14.** When realized by an analog circuit, the HPF **14** has a circuit configuration shown in Figure **7****.** The HPF **14** includes an operational amplifier **12,** resistors **R3** and **R4,** and capacitors **C3** and **C4.** The resistor **R3** is provided in a feedback section.

The analog audio signal **70'** which is input to the second processing section **2** is given to the HPF **14** and the output switch **15.** The HPF **14** removes a low frequency component (a frequency component of about 200 Hz or lower shown in Figure **4****)** of the analog audio signal **70'** and thus generates an analog audio signal **70" .** In this specification, removal of a low frequency component includes attenuation of the low frequency component. The frequency component which is removed by the HPF **14** is preferably a frequency component of about 200 Hz or lower, but is not limited to this. The analog audio signal **70"** output from the HPF **14** is input to the output switch **15.** The output switch **15** selects the analog audio signal **70'** or the analog audio signal **70"** in accordance with settings performed by an external device, and outputs the selected signal to the multiplier **16.** The multiplier **16** multiplies the selected signal with a multiplication coefficient M3 (=1/M2), and outputs the result as the second channel analog audio signal **32".**

The signal processing apparatus **100** in the first example can be either in a mode of outputting the LFE channel analog audio signal **30"** or in a mode of not outputting the LFE channel analog audio signal **30".** In the case where a speaker for an LFE channel is available, the first signal processing section **1** outputs the LFE channel analog audio signal **30" .** In this case, the output switch **15** of the second signal processing section **2** can select and output the analog audio signal **70"** from the HPF **14.** The analog audio signal **70"** is supplied to a speaker for the C channel (second channel) via the multiplier **16.**

In the case where no speaker for an LFE channel is available, the first signal processing section **1** does not output the LFE channel analog audio signal **30".** In the case where the speaker for the C channel can reproduce a low frequency component, the output switch **15** selects the analog audio signal **70'.** Thus, a sound which is supposed to be output from the C channel and a low frequency sound having little directivity can be simultaneously output from the speaker for the C channel. In the case where the speaker for the C channel cannot reproduce a low frequency component due to the system design, the output switch **15** selects the analog audio signal **70".** Thus, the analog audio signal **70"** having the low frequency component removed therefrom can be output to the speaker for the C channel.

As described above, the multiplier **16** multiplies the signal from the output switch **15** with the multiplication coefficient M3. In order to keep satisfactory balance between the analog audio signal **32",** and the other channel analog audio signals **31'** through **3n'** (excluding **32')** and **30",** the multiplication coefficient M3 is set to be 1/M2. In the first example, the multiplier **16** is provided at a stage after the output switch **15,** but can be provided at a stage before the second signal processing section **2.** Substantially the same effect is provided.

In the first example, a low frequency component of the analog audio signal **70'** (including a low frequency component contained in the digital audio signal **32** and a low frequency component contained in the digital audio signal **30)** is extracted by the first signal processing section 1 and is output as the LFE channel analog audio signal **30".** Accordingly, in the case where a speaker for an LFE channel is available, the low frequency component of the analog audio signal **70'** can be output from the speaker for the LFE channel. Since a low frequency sound has little directivity, the overall sound quality is not substantially influenced by which speaker outputs the low frequency sound.

In the first example, as described above, an LFE channel digital audio signal obtained as a result of being multiplied with a multiplication coefficient is added to a signal of a specified channel, which is also obtained as a result of being multiplied with a multiplication coefficient. The resultant signal is D/A-converted, and then an LFE channel analog audio signal is generated by a low pass filter. Due to such a structure, a D/A converter for an LFE channel can be eliminated without spoiling the sound quality. In the first example, n+1 types of digital audio signals can be converted into n types of analog audio signals by an n number of D/A converters. In this case, a low pass filter and a high pass filter are required. Since it is sufficient that the low pass filter and the high pass filter have mild frequency characteristics, the signal processing apparatus can be produced at significantly lower cost as compared to the apparatus including a D/A converter for an LFE channel.

### (Example 2)

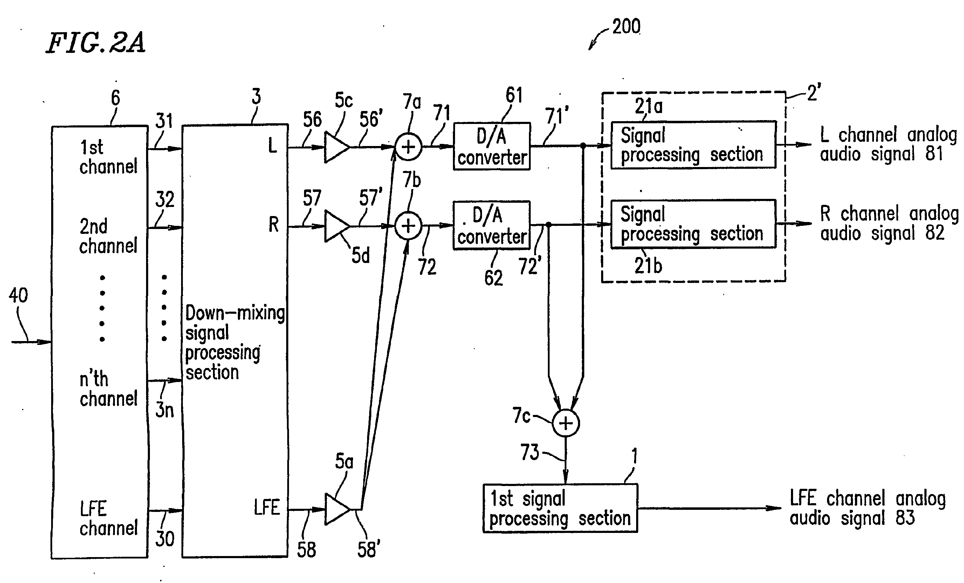

Figure **2A** shows a signal processing apparatus **200** according to a second example of the present invention. The signal processing apparatus **200** includes a first signal processing section **1,** a second signal processing section **2',** a down-mixing signal processing section **3,** D/A converters **61** and **62,** multipliers **5a, 5c** and **5d,** a decoder **6** and adders **7a, 7b** and **7c.**

The signal processing apparatus **200** can execute signal processing with the two D/A converters **61** and **62** and thus can reduce the number of D/A converters as compared to the conventional signal processing apparatus **300** shown in Figure **9****,** which requires three D/A converters.

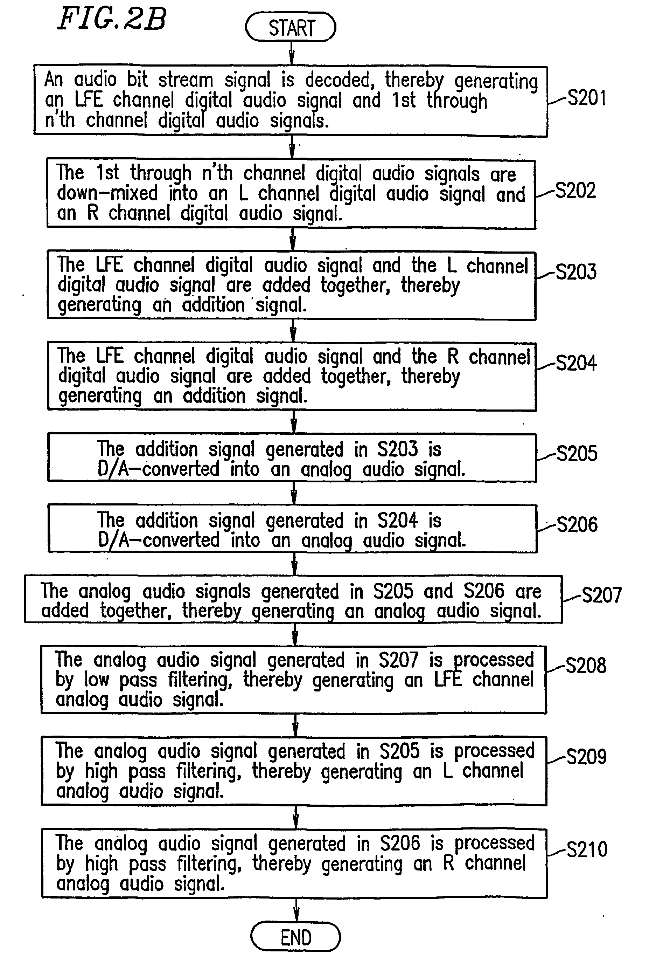

Figure **2B** is a flowchart illustrating an operation of the signal processing apparatus **200** shown in Figure **2A****.**

The operation of the signal processing apparatus **200** will be described with reference to Figure **2B****.**

S201: The decoder **6** receives an audio bit stream signal **40** from an external device. The decoder **6** decodes the audio bit stream signal **40** into a digital audio signal (linear PCM). Then, decoder **6** separates the digital audio signal into a first channel digital audio signal **31,** a second channel digital audio signal **32,** ... an n'th (n≥2) channel digital audio signal **3n,** and an LFE channel digital audio signal **30.** In the case of a 5.1 channel system, n=5.

S202: The down-mixing signal processing section **3** receives the digital audio signals **31, 32,** ... **3n** and **30** and performs down-mixing signal processing.

Down-mixing signal processing can be performed in various manners. In the case of the 5 .1 channel system, the down-mixing signal processing section **3** performs, for example, down-mixing signal processing described above with reference to Figure 11. As described above, the down-mixing signal processing section **3** receives the digital audio signals **31, 32** ... **3n** and **30** (corresponding to the digital audio signals 51 through 55 and **50)** and performs down-mixing signal processing using the multipliers **8a, 8b, 8c, 8d, 8e** and **8f** and adders **9a** and **9b.** As a result, the down-mixing signal processing section **3** outputs an L channel digital audio signal **56,** an R channel digital audio signal **57,** and an LFE channel digital audio signal **58.**

The multiplier **5a** performs amplitude adjustment by multiplying the LFE channel digital audio signal **58** from the down-mixing signal processing section **3** with a multiplication coefficient M1 and outputs a digital audio signal **58'.** The multiplier **5c** performs amplitude adjustment by multiplying the L channel digital audio signal **56** from the down-mixing signal processing section **3** with a multiplication coefficient M4 and outputs a digital audio signal **56'.** The multiplier **5d** performs amplitude adjustment by multiplying the R channel digital audio signal **57** from the down-mixing signal processing section **3** with a multiplication coefficient M4 and outputs a digital audio signal **57'.**

S203: The adder **7a** adds the digital audio signal **58'** and the digital audio signal **56'** and outputs a digital audio signal **71** as an addition signal.

S204: The adder **7b** adds the digital audio signal **58'** and the digital audio signal **57'** and outputs a digital audio signal **72** as an addition signal.

S205: The D/A converter **61** converts the digital audio signal **71** into an analog audio signal **71'.**

S206: The D/A converter **62** converts the digital audio signal **72** into an analog audio signal **72'.**

S207: The adder **7c** adds the analog audio signal **71'** from the D/A converter **61** and the analog audio signal **72'** from the D/A converter **62,** and outputs an analog audio signal **73** as an addition result.

S208: The first signal processing section **1** includes an LPF, and thus performs low pass filtering of the analog audio signal **73** from the adder **7c** so as to extract a low frequency component and outputs an analog audio signal **83** of an LFE channel (an LFE channel analog audio signal **83).**

The second signal processing section **2'** includes signal processing sections **21a** and **21b.** The signal processing sections **21a** and **21b** each includes an HPF.

S209: The signal processing section **21a** performs high pass filtering of the analog audio signal **71'** from the D/A converter **61** so as to remove a low frequency component and thus outputs an analog audio signal **81** of an L channel (an L channel analog audio signal **81).**

S210: The signal processing section **21b** performs high pass filtering of the analog audio signal **72'** from the D/A converter **62** so as to remove a low frequency component and thus outputs an analog audio signal **82** of an R channel (an R channel analog audio signal **82).**

The operation of the signal processing apparatus **200** will be described in more detail. In the following description, the signal processing apparatus **200** decodes a 5.1 channel audio bit stream and outputs analog audio signals of 2.1 channel.

As in the first example, the audio bit stream signal **40** contains multi-channel information. The multi-channel information includes information of a low frequency effect channel for reproducing a low frequency component and information of general channels for reproducing frequency components of all the frequency bands. In the case where the number of channels is 5.1, the number of general channels is 5. In the first example, the first through n'th channel are general channels. In the following description, n=5, the first channel is an L channel, the second channel is a C channel, the third channel is an R channel, the fourth channel is an SL channel, and the fifth channel is an SR channel.

The audio bit stream signal **40** of the 5.1 channels is decoded by the decoder **6** and separated into the first through fifth channel digital audio signals **31** through **35** and the 'LFE channel digital audio signal **30.** The down-mixing signal processing section **3** receives the digital audio signals **31** through **35** and **30** (corresponding to the digital audio signals **51** through **55** and **50),** and performs down-mixing signal processing, for example, as described above with reference to Figure **11** using the multipliers **8a** through **8f** and adders **9b** and **9b.** Thus, the down-mixing signal processing section **3** outputs the L channel digital audio signal **56,** the R channel digital audio signal **57** and the LFE channel digital audio signal **58.**

The LFE channel digital audio signal **58** from the down-mixing signal processing section **3** is multiplied with the multiplication coefficient M1 by the multiplier **5a.** The multiplier **5a** outputs the digital audio signal **58'.** The L channel digital audio signal **56** from the down-mixing signal processing section **3** is multiplied with the multiplication coefficient M4 by the multiplier **5c.** The multiplier **5c** outputs the digital audio signal **56'.** The R channel digital audio signal **57** from the down-mixing signal processing section **3** is multiplied with the multiplication coefficient M4 by the multiplier **5d.** The multiplier **5d** outputs the digital audio signal **57'.** The digital audio signals **56'** from the multiplier **5c** and the digital audio signals **58'** from the multiplier **5a** are added together by the adder **7a,** and the adder **7a** outputs the digital audio signal **71.** The digital audio signals **57'** from the multiplier **5d** and the digital audio signals **58'** from the multiplier **5a** are added together by the adder **7b,** and the adder **7b** outputs the digital audio signal **72.**

The values of M1 and M4 are arbitrarily determined in each embodiment of the present invention. The L and R channel digital audio signals **56** and **57** may possibly contain a signal of a frequency component which is the same as the LFE channel digital audio signal **58.** Therefore, the multiplication coefficients M1 and M4 are preferably determined so that the addition results obtained by the adders **7a** and **7b** do not overflow.

The digital audio signal **71** from the adder **7a** and the digital audio signal **72** from the adder **7b** are respectively input to the D/A converters **61** and **62** and converted into the analog audio signals **71'** and **72'.** The analog audio signals **71'** and **72'** are given to the adder **7c** and the second signal processing section **2'.** The adder **7c** adds the analog audio signals **71'** and **72',** and outputs the analog audio signal **73.** The analog audio signal **73** is given to the first signal processing section **1.**

The first signal processing section **1** includes an LPF **10** described in the first example with reference to Figure **3, 4** and **5****.** The first signal processing section **1** has the characteristics and performs the operation described in the first example except for receiving and outputting different types of signals from those of the first example. In the second example, the first signal processing section **1** receives the analog audio signal **73,** extracts a low frequency component, and outputs the LFE channel analog audio signal **83.**

The signal processing section **21a** of the second signal processing section **2'** generates the L channel analog audio signal **81** from the analog audio signal **71'** in accordance with the values of the multiplication coefficients M1 and M4. The signal processing section **21b** of the second signal processing section **2'** generates the R channel analog audio signal **82** from the analog audio signal **72'** in accordance with the values of the multiplication coefficients M1 and M4.

Referring to Figure **6****,** the signal processing sections **21a** and **21b** each include an HPF **14,** an output switch **15** and a multiplier **16.** The signal processing sections **21a** and **21b** each have the characteristics and performs the operation described in the first example regarding the second signal processing section **2** with reference to Figure **6, 7** and **8** except for receiving and outputting different types of signals from those of the first example.

As in the second processing section **2** in the first example, the analog audio signal **71'** which is input to the signal processing section **21a** is given to the HPF **14** and the output switch **15.** The HPF **14** removes a low frequency component of the analog audio signal **71'.** The output switch **15** selects the analog audio signal **71'** or the output from the HPF **14** in accordance with settings performed by an external device, and outputs the selected signal to the multiplier **16.** The multiplier **16** multiplies the selected signal with a multiplication coefficient M5 (=1/M4), and outputs the result as the L channel analog audio signal **81.** The analog audio signal **72'** which is input to the signal processing section **21b** is given to the HPF **14** and the output switch **15.** The HPF **14** removes a low frequency component of the analog audio signal **72'.** The output switch **15** selects the analog audio signal **72'** or the output from the HPF **14** in accordance with settings performed by an external device, and outputs the selected signal to the multiplier **16.** The multiplier **16** multiplies the selected signal with a multiplication coefficient M5 (=1/M4), and outputs the result as the R channel analog audio signal **82.**

The signal processing apparatus **200** in the second example can be either in a mode of outputting the LFE channel analog audio signal **83** or in a mode of not outputting the LFE channel analog audio signal **83.** In the case where the LFE channel analog audio signal **83** is output from a normal LFE channel speaker or any other appropriate surround speaker unit, the output switch **15** of each of the signal processing sections **21a** and **21b** can select the output from the HPF **14,** and output the selected signal to the multiplier **16.**

In the case where no normal LFE channel speaker or no other appropriate surround speaker unit is available (i.e., in the case where the LFE channel analog audio signal **83** is not output) and further the speakers for the L and R channels can reproduce a low frequency component, the output switches **15** of the signal processing sections **21a** and **21b** select the analog audio signals **71'** and **72'.** Thus, a low frequency sound can be output from the speakers for the L and R channels. In the case where none of the speakers for the L and R channels can reproduce a low frequency component due to the system design, the output switches **15** of the signal processing sections **21a** and **21b** can select the outputs from the HPFs **14** so as to output the analog audio signals **81** and **82** having the low frequency components removed therefrom.

The multiplier **16** of each of the signal processing sections **21a** and **21b** multiplies the signal from the output switch **15** with the multiplication coefficient M5. In order to keep satisfactory balance between the analog audio signals which are output from the channels of the signal processing apparatus **200,** the multiplication coefficient M5 is set to be 1/M4. In the second example, the multiplier **16** is provided at a stage after the output switch **15,** but can be provided at a stage before the second signal processing sections **21a** and **21b.** Substantially the same effect is provided.

In the second example, a low frequency component of each of the analog audio signals **71'** and **72'** is extracted by the first signal processing section 1 and is output as the LFE channel analog audio signal **83.** Accordingly, in the case where a speaker for an LFE channel is available, the low frequency component (including a low frequency component of the L channel and a low frequency component of the R channel) can be output from the speaker for the LFE channel. Since a low frequency sound has little directivity, the overall sound quality is not substantially influenced by which speaker outputs the low frequency sound.

In the second example, as described above, an LFE channel digital audio signal obtained as a result of being multiplied with a multiplication coefficient is added to a digital audio signal of each of the L and R channels, which is also obtained as a result of being multiplied with a multiplication coefficient. The resultant signal is D/A-converted, and then an LFE channel analog audio signal is generated by a low pass filter. Due to such a structure, a D/A converter for an LFE channel can be eliminated without spoiling the sound quality. In this case, a low pass filter and a high pass filter are required. Since it is sufficient that the low pass filter and the high pass filter have mild frequency characteristics, the signal processing apparatus can be produced at significantly lower cost as compared to the apparatus including a D/A converter for an LFE channel.

### (Recording medium)

The signal processing performed in the first and second examples is recordable on a recording medium in the form of a program. As the recording medium, any computer-readable recording medium such as, for example, a floppy disc or a CD-ROM can be used. By installing a signal processing program, read from the recording medium, in any computer which can input and output a digital audio signal and an analog audio signal, the computer is allowed to function as a signal processing apparatus. In this case, signal processing can be performed by a signal processing device built in or connected to the computer, or at least a portion of the signal processing can be executed by the computer using software.

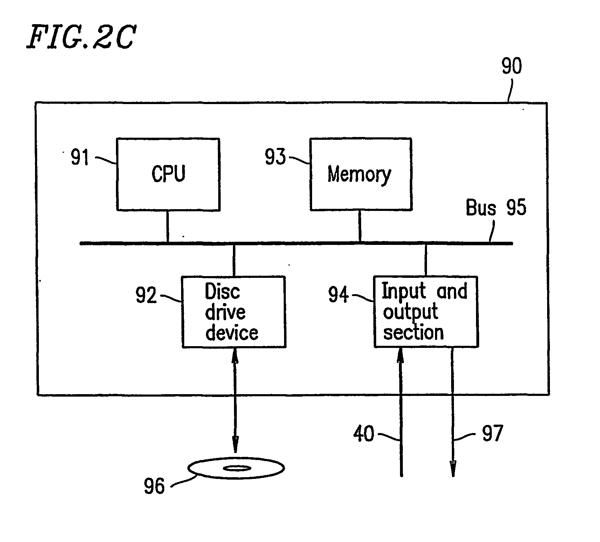

Figure **2C** shows one exemplary structure of a computer **90** for executing such signal processing. The computer **90** includes a CPU **91,** a disc drive device **92** for reading a program from a recording disc **96** storing the program for causing the computer **90** to execute signal processing, a memory **93** for storing the program read by the disc drive device **92,** an input and output section **94** for receiving and outputting an audio bit stream signal **40** and analog audio signals **97** of a plurality of channels which are generated by performing signal processing of the audio bit stream signal **40,** and a bus **95.** In the computer **90,** the signal processing described in the first and second examples is performed by the CPU **91** and the memory **93.** The memory **93** can be a hard disc or the like.

The program can be provided by a recording medium such as, for example, the recording disc **96** or provided by data distribution via, for example, the Internet.

The audio bit stream signal **40** can be provided by a recording medium such as, for example, a DVD, or provided by data distribution via, for example, digital broadcasting or the Internet.

Various other modifications will be apparent to and can be readily made by those skilled in the art without departing from the scope of this invention.

### INDUSTRIAL APPLICABILITY

As described above, according to the present invention, in order to convert a digital audio signal into an analog audio signal so as to reproduce multi-channel signals, an LFE channel digital audio signal is mixed with a digital audio signal of a different channel by digital signal processing. The digital audio signal obtained by the mixing is converted into an analog audio signal. A low frequency component of the analog audio signal is extracted, and thus an LFE channel analog audio signal is generated. An analog audio signal of the different channel can be obtained by removing a low frequency component of the analog audio signal generated as a result of the D/A conversion and then level-adjusting the resultant signal. In this manner, the number of D/A converters can be reduced while keeping the high sound quality of the LFE channel and the general channels. Thus, a high quality signal processing apparatus for multi-channel signals can be provided at low cost. The present invention eliminates a D/A converter for an LFE channel and still outputs a low frequency analog audio signal independently from the other channels.

## Claims

1. A signal processing apparatus, comprising:
a decoder for decoding a stream signal so as to generate a digital audio signal of a low frequency effect channel and digital audio signals of first through n'th (n≥2) channels, wherein the stream signal includes information of a low frequency effect channel, the information containing a low frequency component, and also includes information of the first through n'th channels, the information containing components of all frequency bands, the first through n'th channels having different sound source positions;
an adder section for adding the digital audio signal of the low frequency effect channel and the digital audio signal of a specified channel among the first through n'th channels, so as to generate an addition signal;
an n number of D/A conversion sections for converting the digital audio signals of the first through n'th channels, excluding the digital audio signal of the specified channel, and the addition signal into n types of analog audio signals;
a first signal processing section for performing a first signal processing process of the analog audio signal obtained as a result of D/A conversion of the addition signal, so as to generate an analog audio signal of the low frequency effect channel; and
a second signal processing section for performing a second signal processing process of the analog audio signal obtained as a result of D/A conversion of the addition signal, so as to generate an analog audio signal of the specified channel.

2. A signal processing apparatus according to claim 1, further comprising a multiplication section for adjusting an amplitude of the digital audio signal of the low frequency effect channel generated by the decoder.

3. A signal processing apparatus according to claim 1, further comprising a multiplication section for adjusting an amplitude of the digital audio signal of the specified channel generated by the decoder.

4. A signal processing apparatus according to claim 1, wherein the first signal processing process is a low pass filtering process.

5. A signal processing apparatus according to claim 1, wherein the second signal processing process is one of a high pass filtering process or an all pass filtering process.

6. A signal processing apparatus according to claim 5, wherein the second signal processing section includes a switching section for selecting one of the high pass filtering process and the all pass filtering process,
wherein the all pass filtering process is selected when a low frequency analog audio signal is output from the second signal processing section, and the high pass filtering process is selected when the low frequency analog audio signal is not output from the second signal processing section.

7. A signal processing apparatus according to claim 1, wherein n is 5, and the stream signal contains information of 5.1 channels.

8. A signal processing apparatus, comprising:
a decoder for decoding a stream signal so as to generate a digital audio signal of a low frequency effect channel and digital audio signals of first through n' th (n≥2) channels, wherein the stream signal includes information of a low frequency effect channel, the information containing a low frequency component, and also includes information of the first through n'th channels, the information containing components of all frequency bands, the first through n'th channels having different sound source positions;
a down-mixing signal processing section for converting the digital audio signals of the first through n'th channels into a digital audio signal of an L channel and a digital audio signal of an R channel;
a first addition section for adding the digital audio signal of the low frequency effect channel and the digital audio signal of the L channel, so as to generate a first addition signal;
a second addition section for adding the digital audio signal of the low frequency effect channel and the digital audio signal of the R channel, so as to generate a second addition signal;
a first D/A conversion section for converting the first addition signal into a first analog audio signal;
a second D/A conversion section for converting the second addition signal into a second analog audio signal;
a third addition section for adding the first analog audio signal and the second analog audio signal so as to generate a third analog audio signal;
a first signal processing section for performing a first signal processing process of the third analog audio signal so as to generate a fourth analog audio signal of the low frequency effect channel;
a second signal processing section for performing a second signal processing process of the first analog audio signal so as to generate a fifth analog audio signal of the L channel; and
a third signal processing section for performing third signal processing of the second analog audio signal so as to generate a sixth analog audio signal of the R channel.

9. A signal processing apparatus according to claim 8, further comprising a multiplication section for adjusting an amplitude of the digital audio signal of the low frequency effect channel.

10. A signal processing apparatus according to claim 8, further comprising a multiplication section for adjusting an amplitude of the digital audio signal of the L channel generated by the down-mixing signal processing section.

11. A signal processing apparatus according to claim 8, further comprising a multiplication section for adjusting an amplitude of the digital audio signal of the R channel generated by the down-mixing signal processing section.

12. A signal processing apparatus according to claim 8, wherein the first signal processing process is a low pass filtering process.

13. A signal processing apparatus according to claim 8, wherein the second signal processing process is one of a high pass filtering process or an all pass filtering process.

14. A signal processing apparatus according to claim 13, wherein the second signal processing section includes a switching section for selecting one of the high pass filtering process and the all pass filtering process,
wherein the all pass filtering process is selected when a low frequency analog audio signal is output from the second signal processing section, and the high pass filtering process is selected when the low frequency analog audio signal is not output from the second signal processing section.

15. A signal processing apparatus according to claim 8, wherein the third signal processing is one of a high pass filtering process or an all pass filtering process.

16. A signal processing apparatus according to claim 15, wherein the third signal processing section includes a switching section for selecting one of the high pass filtering process and the all pass filtering process,
wherein the all pass filtering process is selected when a low frequency analog audio signal is output from the third signal processing section, and the high pass filtering process is selected when the low frequency analog audio signal is not output from the third signal processing section.

17. A signal processing apparatus according to claim 8, wherein n is 5, and the stream signal contains information of 5.1 channels.

18. A signal processing method, comprising the steps of:
decoding a stream signal so as to generate a digital audio signal of a low frequency effect channel and digital audio signals of first through n'th (n≥2) channels, wherein the stream signal includes information of a low frequency effect channel, the information containing a low frequency component, and also includes information of the first through n'th channels, the information containing components of all frequency bands, the first through n'th channels having different sound source positions;
adding the digital audio signal of the low frequency effect channel and the digital audio signal of a specified channel among the first through n'th channels, thereby generating an addition signal;
converting the digital audio signals of the first through n'th channels, excluding the digital audio signal of the specified channel, and the addition signal into n types of analog audio signals;
performing a first signal processing process of the analog audio signal obtained as a result of D/A conversion of the addition signal, thereby generating an analog audio signal of the low frequency effect channel; and
performing a second signal processing process of the analog audio signal obtained as a result of D/A conversion of the addition signal, thereby generating an analog audio signal of the specified channel.

19. A signal processing method, comprising the steps of:
decoding a stream signal so as to generate a digital audio signal of a low frequency effect channel and digital audio signals of first through n'th (n≥2) channels, wherein the stream signal includes information of a low frequency effect channel, the information containing a low frequency component, and also includes information of the first through n'th channels, the information containing components of all frequency bands, the first through n'th channels having different sound source positions;
down-mixing the digital audio signals of the first through n'th channels into a digital audio signal of an L channel and a digital audio signal of an R channel;
adding the digital audio signal of the low frequency effect channel and the digital audio signal of the L channel, thereby generating a first addition signal;
adding the digital audio signal of the low frequency effect channel and the digital audio signal of the R channel, thereby generating a second addition signal;
converting the first addition signal into a first analog audio signal;
converting the second addition signal into a second analog audio signal;
adding the first analog audio signal and the second analog audio signal, thereby generating a third analog audio signal;
performing a first signal processing process of the third analog audio signal, thereby generating a fourth analog audio signal of the low frequency effect channel;
performing a second signal processing process of the first analog audio signal, thereby generating a fifth analog audio signal of the L channel; and
performing third signal processing of the second analog audio signal, thereby generating a sixth analog audio signal of the R channel.

20. A program for causing a computer to execute signal processing for converting a digital audio signal into an analog audio signal, the signal processing comprising the steps of:
decoding a stream signal so as to generate a digital audio signal of a low frequency effect channel and digital audio signals of first through n'th (n≥2) channels, wherein the stream signal includes information of a low frequency effect channel, the information containing a low frequency component, and also includes information of the first through n'th channels, the information containing components of all frequency bands, the first through n'th channels having different sound source positions;
adding the digital audio signal of the low frequency effect channel and the digital audio signal of a specified channel among the first through n'th channels, thereby generating an addition signal;
converting the digital audio signals of the first through n'th channels, excluding the digital audio signal of the specified channel, and the addition signal into n types of analog audio signals;
performing a first signal processing process of the analog audio signal obtained as a result of D/A conversion of the addition signal, thereby generating an analog audio signal of the low frequency effect channel; and
performing a second signal processing process of the analog audio signal obtained as a result of D/A conversion of the addition signal, thereby generating an analog audio signal of the specified channel.

21. A program for causing a computer to execute signal processing for converting a digital audio signal into an analog audio signal, the signal processing comprising the steps of:
decoding a stream signal so as to generate a digital audio signal of a low frequency effect channel and digital audio signals of first through n'th (n≥2) channels, wherein the stream signal includes information of a low frequency effect channel, the information containing a low frequency component, and also includes information of the first through n'th channels, the information containing components of all frequency bands, the first through n'th channels having different sound source positions;
down-mixing the digital audio signals of the first through n'th channels into a digital audio signal of an L channel and a digital audio signal of an R channel;
adding the digital audio signal of the low frequency effect channel and the digital audio signal of the L channel, thereby generating a first addition signal;
adding the digital audio signal of the low frequency effect channel and the digital audio signal of the R channel, thereby generating a second addition signal;
converting the first addition signal into a first analog audio signal;
converting the second addition signal into a second analog audio signal;
adding the first analog audio signal and the second analog audio signal, thereby generating a third analog audio signal;
performing a first signal processing process of the third analog audio signal, thereby generating a fourth analog audio signal of the low frequency effect channel;
performing a second signal processing process of the first analog audio signal, thereby generating a fifth analog audio signal of the L channel; and
performing third signal processing of the second analog audio signal, thereby generating a sixth analog audio signal of the R channel.

22. A computer readable recording medium having a program, recorded thereon, for causing a computer to execute signal processing for converting a digital audio signal into an analog audio signal, the signal processing comprising the steps of:
decoding a stream signal so as to generate a digital audio signal of a low frequency effect channel and digital audio signals of first through n' th (n≥2) channels, wherein the stream signal includes information of a low frequency effect channel, the information containing a low frequency component, and also includes information of the first through n'th channels, the information containing components of all frequency bands, the first through n'th channels having different sound source positions;
adding the digital audio signal of the low frequency effect channel and the digital audio signal of a specified channel among the first through n'th channels, thereby generating an addition signal;
converting the digital audio signals of the first through n'th channels, excluding the digital audio signal of the specified channel, and the addition signal into n types of analog audio signals;
performing a first signal processing process of the analog audio signal obtained as a result of D/A conversion of the addition signal, thereby generating an analog audio signal of the low frequency effect channel; and
performing a second signal processing process of the analog audio signal obtained as a result of D/A conversion of the addition signal, thereby generating an analog audio signal of the specified channel.

23. A computer-readable recording medium having a program, recorded thereon, for causing a computer to execute signal processing for converting a digital audio signal into an analog audio signal, the signal processing comprising the steps of:
decoding a stream signal so as to generate a digital audio signal of a low frequency effect channel and digital audio signals of first through n'th (n≥2) channels, wherein the stream signal includes information of a low frequency effect channel, the information containing a low frequency component, and also includes information of the first through n'th channels, the information containing components of all frequency bands, the first through n'th channels having different sound source positions;
down-mixing the digital audio signals of the first through n'th channels into a digital audio signal of an L channel and a digital audio signal of an R channel;
adding the digital audio signal of the low frequency effect channel and the digital audio signal of the L channel, thereby generating a first addition signal;
adding the digital audio signal of the low frequency effect channel and the digital audio signal of the R channel, thereby generating a second addition signal;
converting the first addition signal into a first analog audio signal;
converting the second addition signal into a second analog audio signal;
adding the first analog audio signal and the second analog audio signal, thereby generating a third analog audio signal;
performing a first signal processing process of the third analog audio signal, thereby generating a fourth analog audio signal of the low frequency effect channel;
performing a second signal processing process of the first analog audio signal, thereby generating a fifth analog audio signal of the L channel; and
performing third signal processing of the second analog audio signal, thereby generating a sixth analog audio signal of the R channel.

## Patentansprüche

1. Signalverarbeitungsvorrichtung, die umfasst:
einen Decodierer, um ein Stream-Signal zu decodieren, um ein digitales Audiosignal eines Kanals mit Niederfrequenzeffekt und digitale Audiosignale eines ersten bis n-ten (n ≥ 2) Kanals zu erzeugen, wobei das Stream-Signal Informationen eines Kanals mit Niederfrequenzeffekt enthält, wobei die Informationen eine Niederfrequenzkomponente umfassen, und außerdem Informationen über den ersten bis n-ten Kanal enthält, wobei die Informationen Komponenten aller Frequenzbänder umfassen, wobei die ersten bis n-ten Kanäle unterschiedliche Schallquellenpositionen haben;
einen Addiererabschnitt, um das digitale Audiosignal des Kanals mit Niederfrequenzeffekt und das digitale Audiosignal eines bestimmten Kanals unter dem ersten bis n-ten Kanal zu addieren, um ein Additionssignal zu erzeugen;
D/A-Umsetzungsabschnitte in einer Anzahl n, um die digitalen Audiosignale des ersten bis n-ten Kanals mit Ausnahme des digitalen Audiosignals des bestimmten Kanals sowie das Additionssignal in n Typen analoger Audiosignale umzusetzen;
einen ersten Signalverarbeitungsabschnitt, um einen ersten Signalverarbeitungsprozess des analogen Audiosignals, das als ein Ergebnis der D/A-Umsetzung des Additionssignals erhalten wird, auszuführen, um ein analoges Audiosignal des Kanals mit Niederfrequenzeffekt zu erzeugen; und
einen zweiten Signalverarbeitungsabschnitt, um einen zweiten Signalverarbeitungsprozess des analogen Audiosignals auszuführen, das als ein Ergebnis der DIA-Umsetzung des Additionssignals erhalten wird, um ein analoges Audiosignal des bestimmten Kanals zu erzeugen.

2. Signalverarbeitungsvorrichtung nach Anspruch 1, die ferner einen Multiplikationsabschnitt umfasst, um eine Amplitude des digitalen Audiosignals des Kanals mit Niederfrequenzeffekt, das durch den Decodierer erzeugt wird, einzustellen.

3. Signalverarbeitungsvorrichtung nach Anspruch 1, die ferner einen Multiplikationsabschnitt umfasst, um eine Amplitude des digitalen Audiosignals des bestimmten Kanals, das durch den Dekodierer erzeugt wird, einzustellen.

4. Signalverarbeitungsvorrichtung nach Anspruch 1, wobei der erste Signalverarbeitungsprozess ein Tiefpass-Filterungsprozess ist.

5. Signalverarbeitungsvorrichtung nach Anspruch 1, wobei der zweite Signalverarbeitungsprozess entweder ein Hochpass-Filterungsprozess oder ein Allpass-Filterungsprozess ist.

6. Signalverarbeitungsvorrichtung nach Anspruch 5, wobei der zweite Signalverarbeitungsabschnitt einen Schaltabschnitt umfasst, um entweder den Hochpass-Filterungsprozess oder den Allpass-Filterungsprozess auszuwählen,
wobei der Allpass-Filterungsprozess ausgewählt wird, wenn von dem zweiten Signalverarbeitungsabschnitt ein niederfrequentes analoges Audiosignal ausgegeben wird, und der Hochpass-Filterungsprozess ausgewählt wird, wenn von dem zweiten Signalverarbeitungsabschnitt nicht das niederfrequente analoge Audiosignal ausgegeben wird.

7. Signalverarbeitungsvorrichtung nach Anspruch 1, wobei n gleich 5 ist und das Stream-Signal Informationen über 5.1 Kanäle enthält.

8. Signalverarbeitungsvorrichtung, die umfasst:
einen Decodierer, um ein Stream-Signal zu decodieren, um ein digitales Audiosignal eines Kanals mit Niederfrequenzeffekt und digitale Audiosignale eines ersten bis n-ten (n≥ 2) Kanals zu erzeugen, wobei das Stream-Signal Informationen Ober einen Kanal mit Niederfrequenzeffekfi enthält, wobei die Informationen eine Niederfrequenzkomponente umfassen, und außerdem Informationen über den ersten bis n-ten Kanal enthält, wobei die Informationen Komponenten aller Frequenzbänder umfassen, wobei die ersten bis n-ten Kanäle unterschiedliche Schallquellenpositionen haben;
einen Abwärtsmischungs-Signalverarbeitungsabschnitt, um die digitalen Audiosignale des ersten bis n-ten Kanals in ein digitales Audiosignal eines L-Kanals und in ein digitales Audiosignal eines R-Kanals umzusetzen;
einen ersten Additionsabschnitt, um das digitale Audiosignal des Kanals mit Niederfrequenzeffekt und das digitale Audiosignal des L-Kanals zu addieren, um ein erstes Additionssignal zu erzeugen;
einen zweiten Additionsabschnüt, um das digitale Audiosignal des Kanals mit Niederfrequenzeffekt und das digitale Audiosignal des R-Kanals zu addieren, um ein zweites Additionssignal zu erzeugen;
einen ersten D/A-Umsetzungsabschnitt, um das erste Additionssignal in ein erstes analoges Audiosignal umzusetzen;
einen zweiten DIA-Umsetzungsabschnitt, um das zweite Additionssignal in ein zweites analoges Audiosignal umzusetzen;
einen dritten Additionsabschnitt, um das erste analoge Audiosignal und das zweite analoge Audiosignal zu addieren, um ein drittes analoges Audiosignal zu erzeugen;
einen ersten Signalverarbeitungsabschnitt, um einen ersten Signalverarbeitungsprozess des dritten analogen Audiosignals auszuführen, um ein viertes analoges Audiosignal des Kanals mit Niederfrequenzeffekt zu erzeugen;
einen zweiten Signalverarbeitungsabschnitt, um einen zweiten Signalverarbeitungsprozess des ersten analogen Audiosignals auszuführen, um ein fünftes analoges Audiosignal des L-Kanals zu erzeugen; und
einen dritten Signalverarbeitungsabschnitt, um eine dritte Signalverarbeitung des zweiten analogen Audiosignals auszufahren, um ein sechstes analoges Audiosignal des R-Kanals zu erzeugen.

9. Signalverarbeitungsvorrichtung nach Anspruch 8, die ferner einen Multiplikationsabschnitt umfasst, um eine Amplitude des digitalen Audiosignals des Kanals mit Niederfrequenzeffekt einzustellen.

10. Signalverarbeitungsvorrichtung nach Anspruch 8, die ferner einen Multiplikationsabschnitt umfasst, um eine Amplitude des digitalen Audiosignals des L-Kanals, das durch den Abwärtsmischungs-Signalverarbeitungsabschnitt erzeugt wird, einzustellen.

11. Signalverarbeitungsvorrichtung nach Anspruch 8, die ferner einen Multiplikationsabschnitt umfasst, um eine Amplitude des digitalen Audiosignals des R-Kanals, das durch den Abwärtsmischungs-Signalverarbeitungsabschnitt erzeugt wird, einzustellen.

12. Signalverarbeitungsvorrichtung nach Anspruch 8, wobei der erste Signalverarbeitungsprozess ein Tiefpass-Filterungsprozess ist.

13. Signalverarbeitungsvorrichtung nach Anspruch 8, wobei der zweite Signalverarbeitungsprozess entweder ein Hochpass-Filterungsprozess oder ein Allpass-Filterungsprozess ist.

14. Signalverarbeitungsvorrichtung nach Anspruch 13, wobei der zweite Signalverarbeitungsabschnitt einen Schaltabschnitt umfasst, um entweder den Hochpass-Filterungsprozess oder den Allpass-Filterungsprozess auszuwählen,
wobei der Allpass-Filterungsprozess ausgewählt wird, wenn von dem zweiten Signalverarbeitungsabschnitt ein niederfrequentes analoges Audiosignal ausgegeben wird, und der Hochpass-Filterungsprozess ausgewählt wird, wenn von dem zweiten Signalverarbeitungsabschnitt das niederfrequente analoge Audiosignal nicht ausgegeben wird.

15. Signalverarbeitungsvorrichtung nach Anspruch 8, wobei die dritte Signalverarbeitung entweder ein Hochpass-Filterungsprozess oder ein Allpass-Filterungsprozess ist,

16. Signalverarbeitungsvorrichtung nach Anspruch 15, wobei der dritte Signalverarbeitungsabschnitt einen Schaltabschnitt umfasst, um entweder den Hochpass-Filterungsprozess oder den Allpass-Filterungsprozess auszuwählen,
wobei der Allpass-Filterungsprozess ausgewählt wird, wenn von dem dritten Signalverarbeitungsabschnitt ein niederfrequentes analoges Audiosignal ausgegeben wird, und der Hochpass-Filterungsprozess ausgewählt wird, wenn von dem dritten Signalverarbeitungsabschnitt das niederfrequente analoge Audiosignal nicht ausgegeben wird.

17. Signalverarbeitungsvorrichtung nach Anspruch 8, wobei n gleich 5 ist und das Stream-Signal Informationen von 5.1 Kanälen enthält.

18. Signalverarbeitungsverfahren, das die folgenden Schritte umfasst:
Decodieren eines Stream-Signals, um ein digitales Audiosignal eines Kanals mit Niederfrequenzeffekt und digitale Audiosignale eines ersten bis n-ten (n ≥ 2) Kanals zu erzeugen, wobei das Stream-Signal Informationen eines Kanals mit Niederfrequenzeffekt enthält, wobei die Informationen eine niederfrequente Komponente umfassen, und außerdem Informationen des ersten bis n-ten Kanals enthält, wobei die Informationen Komponenten aller Frequenzbänder umfassen, wobei die ersten bis n-ten Kanäle unterschiedliche Schallquellenpositionen haben;
Addieren des digitalen Audiosignals des Kanals mit Niederfrequenzeffekt und des digitalen Audiosignals eines bestimmten Kanals unter dem ersten bis n-ten Kanal, um dadurch ein Additionssignal zu erzeugen;
Umsetzen der digitalen Audiosignale des ersten bis n-ten Kanals ohne das digitale Audiosignal des bestimmten Kanals und des Additionssignals in n Typen analoger Audiosignale;
Ausführen eines ersten Signalverarbeitungsprozesses des analogen Audiosignals, das als ein Ergebnis der D/A-Umsetzurtg des Additionssignals erhalten wird, um dadurch ein analoges Audiosignal des Kanals mit Niederfrequenzeffekt zu erzeugen; und
Ausführen eines zweiten Signalverarbeitungsprozesses des analogen Audiosignals, das als ein Ergebnis der DIA-Umsetzung des Additionssignals erhalten wird, um dadurch ein analoges Audiosignal des bestimmten Kanals zu erzeugen.

19. Signalverarbeitungsverfahren, das die folgenden Schritte umfasst:
Decodieren eines Stream-Signals, um ein digitales Audiosignal eines Kanals mit Niederfrequenzeffekt und digitale Audiosignale eines ersten bis n-ten (n ≥ 2) Kanals zu erzeugen, wobei das Stream-Signal Informationen eines Kanals mit Niederfrequenzeffekt enthält, wobei die Informationen eine niederfrequente Komponente umfassen, und außerdem Informationen des ersten bis n-ten Kanals enthält, wobei die Informationen Komponenten aller Frequenzbänder umfassen, wobei die ersten bis n-ten Kanäle unterschiedliche Schallquellenpositionen haben;
Abwärtsmischen der digitalen Audiosignale des ersten bis n-ten Kanals in ein digitales Audiosignal eines L-Kanals und ein digitales Audiosignal eines R-Kanals;
Addieren des digitalen Audiosignals des Kanals mit Niederfrequenzeffekt und des digitalen Audiosignals des L-Kanals, um dadurch ein erstes Additionssignal zu erzeugen;
Addieren des digitalen Audiosignals des Kanals mit Niederfrequenzeffekt und des digitalen Audiosignals des R-Kanals, um dadurch ein zweites Additionssignal zu erzeugen;
Umsetzen des ersten Additionssignals in ein erstes analoges Audiosignal;
Umsetzen des zweiten Additionssignals in ein zweites analoges Audiosignal;
Addieren des ersten analogen Audiosignals und des zweiten analogen Audiosignals, um dadurch ein drittes analoges Audiosignal zu erzeugen;
Ausführen eines ersten Signalverarbeitungsprozesses des dritten analogen Audiosignals, um dadurch ein viertes analoges Audiosignal des Kanals mit Niederfrequenzeffekt zu erzeugen;
Ausführen eines zweiten Signalverarbeitungsprozesses des ersten analogen Audiosignals, um dadurch ein fünftes analoges Audiosignal des L-Kanals zu erzeugen; und
Ausführen einer dritten Signalverarbeitung des zweiten analogen Audiosignals, um dadurch ein sechstes analoges Audiosignal des R-Kanals zu erzeugen.

20. Programm, um einen Computer dazu zu veranlassen, eine Signalverarbeitung zum Umsetzen eines digitalen Audiosignals in ein analoges Audiosignal auszuführen, wobei die Signalverarbeitung die folgenden Schritte umfasst:
Decodieren eines Stream-Signals, um ein digitales Audiosignal eines Kanals mit Niederfrequenzeffekt und digitale Audiosignale eines ersten bis n-ten (n ≥ 2) Kanals zu erzeugen, wobei das Stream-Signal Informationen eines Kanals mit Niederfrequenzeffekt enthält, wobei die Informationen eine niederfrequente Komponente umfassen, und außerdem Informationen des ersten bis n-ten Kanals enthält, wobei die Informationen Komponenten aller Frequenzbänder umfassen, wobei die ersten bis n-ten Kanäle unterschiedliche Schallquellenpositionen haben;
Addieren des digitalen Audiosignals des Kanals mit Niederfrequenzeffekt und des digitalen Audiosignals eines bestimmten Kanals unter dem ersten bis n-ten Kanal, um dadurch ein Additionssignal zu erzeugen;
Umsetzen der digitalen Audiosignale des ersten bis n-ten Kanals ohne das digitale Audiosignal des bestimmten Kanals und des Additionssignals in n Typen analoger Audiosignale;
Ausführen eines ersten Signalverarbeitungsprozesses des analogen Audiosignals, das als ein Ergebnis der D/A-Umsetzung des Additionssignals erhalten wird, um dadurch ein analoges Audiosignal des Kanals mit Niederfrequenzeffekt zu erzeugen; und
Ausführen eines zweiten Signalverarbeitungsprozesses des analogen Audiosignals, das als ein Ergebnis der DIA-Umsetzung des Additionssignals erhalten wird, um dadurch ein analoges Audiosignal des bestimmten Kanals zu erzeugen.

21. Programm, um einen Computer dazu zu veranlassen, eine Signalverarbeitung zum Umsetzen eines digitalen Audiosignals in ein analoges Audiosignal auszuführen, wobei die Signalverarbeitung die folgenden Schritte umfasst:
Decodieren eines Stream-Signals, um ein digitales Audiosignal eines Kanals mit Niederfrequenzeffekt und digitale Audiosignale eines ersten bis n-ten (n ≥ 2) Kanals zu erzeugen, wobei das Stream-Signal Informationen eines Kanals mit Niederfrequenzeffekt enthält, wobei die Informationen eine niederfrequente Komponente umfassen, und außerdem Informationen des ersten bis n-ten Kanals enthält, wobei die Informationen Komponenten aller Frequenzbänder umfassen, wobei die ersten bis n-ten Kanäle unterschiedliche Schallquellenpositionen haben;
Abwärtsmischen der digitalen Audiosignale des ersten bis n-ten Kanals in ein digitales Audiosignal eines L-Kanals und ein digitales Audiosignal eines R-Kanals;
Addieren des digitalen Audiosignals des Kanals mit Niederfrequenzeffekt und des digitalen Audiosignals des L-Kanals, um dadurch ein erstes Additionssignal zu erzeugen;
Addieren des digitalen Audiosignals des Kanals mit Niederfrequenzeffekt und des digitalen Audiosignals des R-Kanals, um dadurch ein zweites Additionssignal zu erzeugen;
Umsetzen des ersten Additionssignals in ein erstes analoges Audiosignal;
Umsetzen des zweiten Additionssignals in ein zweites analoges Audiosignal;
Addieren des ersten analogen Audiosignals und des zweiten analogen Audiosignals, um dadurch ein drittes analoges Audiosignal zu erzeugen;
Ausführen eines ersten Signalverarbeitungsprozesses des dritten analogen Audiosignals, um dadurch ein viertes analoges Audiosignal des Kanals mit Niederfrequenzeffekt zu erzeugen;
Ausführen eines zweiten Signalverarbeitungsprozesses des ersten analogen Audiosignals, um dadurch ein fünftes analoges Audiosignal des L-Kanals zu erzeugen; und
Ausführen einer dritten Signalverarbeitung des zweiten analogen Audiosignals, um dadurch ein sechstes analoges Audiosignal des R-Kanals zu erzeugen.

22. Computerlesbares Aufzeichnungsmedium mit einem darauf aufgezeichneten Programm, um einen Computer dazu zu veranlassen, eine Signalverarbeitung zum Umsetzen eines digitalen Audiosignals in ein analoges Audiosignal auszuführen, wobei die Signalverarbeitung die folgenden Schritte umfasst:
Decodieren eines Stream-Signals, um ein digitales Audiosignal eines Kanals mit Niederfrequenzeffekt und digitale Audiosignale eines ersten bis n-ten (n ≥ 2) Kanals zu erzeugen, wobei das Stream-Signal Informationen eines Kanals mit Niederfrequenzeffekt enthält, wobei die Informationen eine niederfrequente Komponente umfassen, und außerdem Informationen des ersten bis n-ten Kanals enthält, wobei die Informationen Komponenten aller Frequenzbänder umfassen, wobei die ersten bis n-ten Kanäle unterschiedliche Schallquellenpositionen haben;
Addieren des digitalen Audiosignals des Kanals mit Niederfrequenzeffekt und des digitalen Audiosignals eines bestimmten Kanals unter dem ersten bis n-ten Kanal, um dadurch ein Additionssignal zu erzeugen;
Umsetzen der digitalen Audiosignale des ersten bis n-ten Kanals ohne das digitale Audiosignal des bestimmten Kanals und des Additionssignals in n Typen analoger Audiosignale;
Ausführen eines ersten Signalverarbeitungsprozesses des analogen Audiosignals, das als ein Ergebnis der D/A-Umsetzung des Additionssignals erhalten wird, um dadurch ein analoges Audiosignal des Kanals mit Niederfrequenzeffekt zu erzeugen; und
Ausführen eines zweiten Signalverarbeitungsprozesses des analogen Audiosignals, das als ein Ergebnis der DIA-Umsetzung des Additionssignals erhalten wird, um dadurch ein analoges Audiosignal des bestimmten Kanals zu erzeugen.

23. Computerlesbares Aufzeichnungsmedium mit einem darauf aufgezeichneten Programm, um einen Computer dazu zu veranlassen, eine Signalverarbeitung zum Umsetzen eines digitalen Audiosignals in ein analoges Audiosignal auszuführen, wobei die Signalverarbeitung die folgenden Schritte umfasst:
Decodieren eines Stream-Signals, um ein digitales Audiosignal eines Kanals mit Niederfrequenzeffekt und digitale Audiosignale eines ersten bis n-ten (n ≥ 2) Kanals zu erzeugen, wobei das Stream-Signal Informationen eines Kanals mit Niederfrequenzeffekt enthält, wobei die Informationen eine niederfrequente Komponente umfassen, und außerdem Informationen des ersten bis n-ten Kanals enthält, wobei die Informationen Komponenten aller Frequenzbänder umfassen, wobei die ersten bis n-ten Kanäle unterschiedliche Schallquellenpositionen haben;
Abwärtsmischen der digitalen Audiosignale des ersten bis n-ten Kanals in ein digitales Audiosignal eines L-Kanals und ein digitales Audiosignal eines R-Kanals;
Addieren des digitalen Audiosignals des Kanals mit Niederfrequenzeffekt und des digitalen Audiosignals des L-Kanals, um dadurch ein erstes Additionssignal zu erzeugen;
Addieren des digitalen Audiosignals des Kanals mit Niederfrequenzeffekt und des digitalen Audiosignals des R-Kanals, um dadurch ein zweites Additionssignal zu erzeugen;
Umsetzen des ersten Additionssignals in ein erstes analoges Audiosignal;
Umsetzen des zweiten Additionssignals in ein zweites analoges Audiosignal;
Addieren des ersten analogen Audiosignals und des zweiten analogen Audiosignals, um dadurch ein drittes analoges Audiosignal zu erzeugen;
Ausführen eines ersten Signalverarbeitungsprozesses des dritten analogen Audiosignals, um dadurch ein viertes analoges Audiosignal des Kanals mit Niederfrequenzeffekt zu erzeugen;
Ausführen eines zweiten Signalverarbeitungsprozesses des ersten analogen Audiosignals, um dadurch ein fünftes analoges Audiosignal des L-Kanals zu erzeugen; und
Ausführen einer dritten Signalverarbeitung des zweiten analogen Audiosignals, um dadurch ein sechstes analoges Audiosignal des R-Kanals zu erzeugen.

## Revendications

1. Appareil de traitement de signaux, comprenant :
un décodeur pour décoder un signal de flux de façon à générer un signal audio numérique d'un canal d'effets basse fréquence et des signaux audio numériques d'un premier à un n^{ème} (n≥2) canaux, dans lequel le signal de flux inclut des informations d'un canal d'effets basse fréquence, les informations contenant une composante basse fréquence, et inclut également des informations du premier au n^{ème} canaux, les informations contenant des composantes de toutes les bandes de fréquences, les premier au n^{ème} canaux ayant différentes positions de source de son ;
une section de sommateur pour ajouter le signal audio numérique du canal d'effets basse fréquence et le signal audio numérique d'un canal spécifié parmi les premier au n^{ème} canaux, de façon à générer un signal d'addition ;
un nombre n de sections de conversion N/A pour convertir les signaux audio numériques des premier au n^{ème} canaux, à l'exclusion du signal audio numérique du canal spécifié, et le signal d'addition en n types de signaux audio analogiques ;
une première section de traitement de signaux pour mettre en oeuvre un premier processus de traitement de signal du signal audio analogique obtenu en résultat de la conversion N/A du signal d'addition, de façon à générer un signal audio analogique du canal d'effets basse fréquence ; et
une deuxième section de traitement de signaux pour mettre en oeuvre un deuxième processus de traitement de signal du signal audio analogique obtenu en résultat de la conversion N/A du signal d'addition, de façon à générer un signal audio analogique du canal spécifié.

2. Appareil de traitement de signaux selon la revendication 1, comprenant en outre une section de multiplication pour ajuster une amplitude du signal audio numérique du canal d'effets basse fréquence généré par le décodeur.

3. Appareil de traitement de signaux selon la revendication 1, comprenant en outre une section de multiplication pour ajuster une amplitude du signal audio numérique du canal spécifié généré par le décodeur.

4. Appareil de traitement de signaux selon la revendication 1, dans lequel le premier processus de traitement de signal est un processus de filtrage passe-bas.

5. Appareil de traitement de signaux selon la revendication 1, dans lequel le deuxième processus de traitement de signal est l'un d'un processus de filtrage passe-haut ou d'un processus de filtrage passe-tout.

6. Appareil de traitement de signaux selon la revendication 5, dans lequel la deuxième section de traitement de signaux inclut une section de commutation pour sélectionner l'un du processus de filtrage passe-haut et du processus de filtrage passe-tout,
dans lequel le processus de filtrage passe-tout est sélectionné lorsqu'un signal audio analogique basse fréquence est délivré en sortie de la deuxième section de traitement de signaux, et le processus de filtrage passe-haut est sélectionné lorsque le signal audio analogique basse fréquence n'est pas délivré en sortie de la deuxième section de traitement de signaux.

7. Appareil de traitement de signaux selon la revendication 1, dans lequel n est 5, et le signal de flux contient des informations de canaux 5.1.

8. Appareil de traitement de signaux, comprenant :
un décodeur pour décoder un signal de flux de façon à générer un signal audio numérique d'un canal d'effets basse fréquence et des signaux audio numériques d'un premier à un n^{ème} (n≥2) canaux, dans lequel le signal de flux inclut des informations d'un canal d'effets basse fréquence, les informations contenant une composante basse fréquence, et inclut également des informations du premier au n^{ème} canaux, les informations contenant des composantes de toutes les bandes de fréquences, les premier au n^{ème} canaux ayant différentes positions de source de son ;
une section de traitement de signaux par abaissement pour convertir les signaux audio numériques des premier au n^{ème} canaux en un signal audio numérique d'un canal L et un signal audio numérique d'un canal R ;
une première section d'addition pour ajouter le signal audio numérique du canal d'effets basse fréquence et le signal audio numérique du canal L, de façon à générer un premier signal d'addition ;
une deuxième section d'addition pour ajouter le signal audio numérique du canal d'effets basse fréquence et le signal audio numérique du canal R, de façon à générer un deuxième signal d'addition ;
une première section de conversion N/A pour convertir le premier signal d'addition en un premier signal audio analogique ;
une deuxième section de conversion N/A pour convertir le deuxième signal d'addition en un deuxième signal audio analogique ;
une troisième section d'addition pour ajouter le premier signal audio analogique et le deuxième signal audio analogique de façon à générer un troisième signal audio analogique ;
une première section de traitement de signaux pour mettre en oeuvre un premier processus de traitement de signal du troisième signal audio analogique de façon à générer un quatrième signal audio analogique du canal d'effets basse fréquence ;
une deuxième section de traitement de signaux pour mettre en oeuvre un deuxième processus de traitement de signal du premier signal audio analogique de façon à générer un cinquième signal audio analogique du canal L ; et
une troisième section de traitement de signaux pour mettre en oeuvre un troisième processus de traitement de signal du deuxième signal audio analogique de façon à générer un sixième signal audio analogique du canal R.

9. Appareil de traitement de signaux selon la revendication 8, comprenant en outre une section de multiplication pour ajuster une amplitude du signal audio numérique du canal d'effets basse fréquence.

10. Appareil de traitement de signaux selon la revendication 8, comprenant en outre une section de multiplication pour ajuster une amplitude du signal audio numérique du canal L généré par la section de traitement de signaux par abaissement.

11. Appareil de traitement de signaux selon la revendication 8, comprenant en outre une section de multiplication pour ajuster une amplitude du signal audio numérique du canal R généré par la section de traitement de signaux par abaissement.

12. Appareil de traitement de signaux selon la revendication 8, dans lequel le premier processus de traitement de signal est un processus de filtrage passe-bas.

13. Appareil de traitement de signaux selon la revendication 8, dans lequel le deuxième processus de traitement de signal est l'un d'un processus de filtrage passe-haut ou d'un processus de filtrage passe-tout.

14. Appareil de traitement de signaux selon la revendication 13, dans lequel la deuxième section de traitement de signaux inclut une section de commutation pour sélectionner l'un du processus de filtrage passe-haut et du processus de filtrage passe-tout,
dans lequel le processus de filtrage passe-tout est sélectionné lorsqu'un signal audio analogique basse fréquence est délivré en sortie de la deuxième section de traitement de signaux, et le processus de filtrage passe-haut est sélectionné lorsque le signal audio analogique basse fréquence n'est pas délivré en sortie de la deuxième section de traitement de signaux.

15. Appareil de traitement de signaux selon la revendication 8, dans lequel le troisième processus de traitement de signal est l'un d'un processus de filtrage passe-haut ou d'un processus de filtrage passe-tout.

16. Appareil de traitement de signaux selon la revendication 15, dans lequel la troisième section de traitement de signaux inclut une section de commutation pour sélectionner l'un du processus de filtrage passe-haut et du processus de filtrage passe-tout,
dans lequel le processus de filtrage passe-tout est sélectionné lorsqu'un signal audio analogique basse fréquence est délivré en sortie de la troisième section de traitement de signaux, et le processus de filtrage passe-haut est sélectionné lorsque le signal audio analogique basse fréquence n'est pas délivré en sortie de la troisième section de traitement de signaux.

17. Appareil de traitement de signaux selon la revendication 8, dans lequel n est 5, et le signal de flux contient des informations de canaux 5.1.

18. Procédé de traitement de signaux, comprenant les étapes de :
décodage d'un signal de flux de façon à générer un signal audio numérique d'un canal d'effets basse fréquence et des signaux audio numériques d'un premier à un n^{ème} (n≥2) canaux, dans lequel le signal de flux inclut des informations d'un canal d'effets basse fréquence, les informations contenant une composante basse fréquence, et inclut également des informations du premier au n^{ème} canaux, les informations contenant des composantes de toutes les bandes de fréquences, les premier au n^{ème} canaux ayant différentes positions de source de son ;
ajout du signal audio numérique du canal d'effets basse fréquence et du signal audio numérique d'un canal spécifié parmi les premier au n^{ème} canaux, générant ainsi un signal d'addition ;
conversion des signaux audio numériques des premier au n^{ème} canaux, à l'exclusion du signal audio numérique du canal spécifié, et du signal d'addition en n types de signaux audio analogiques ;
mise en oeuvre d'un premier processus de traitement de signal du signal audio analogique obtenu en résultat de la conversion N/A du signal d'addition, générant ainsi un signal audio analogique du canal d'effets basse fréquence ; et
mise en oeuvre d'un deuxième processus de traitement de signal du signal audio analogique obtenu en résultat de la conversion N/A du signal d'addition, générant ainsi un signal audio analogique du canal spécifié.

19. Procédé de traitement de signaux, comprenant les étapes de :
décodage d'un signal de flux de façon à générer un signal audio numérique d'un canal d'effets basse fréquence et des signaux audio numériques d'un premier à un n^{ème} (n≥2) canaux, dans lequel le signal de flux inclut des informations d'un canal d'effets basse fréquence, les informations contenant une composante basse fréquence, et inclut également des informations du premier au n^{ème} canaux, les informations contenant des composantes de toutes les bandes de fréquences, les premier au n^{ème} canaux ayant différentes positions de source de son ;
abaissement des signaux audio numériques des premier au n^{ème} canaux en un signal audio numérique d'un canal L et un signal audio numérique d'un canal R ;
addition du signal audio numérique du canal d'effets basse fréquence et du signal audio numérique du canal L, générant ainsi un premier signal d'addition ;
addition du signal audio numérique du canal d'effets basse fréquence et du signal audio numérique du canal R, générant ainsi un deuxième signal d'addition ;
conversion du premier signal d'addition en un premier signal audio analogique ;
conversion du deuxième signal d'addition en un deuxième signal audio analogique ;
addition du premier signal audio analogique et du deuxième signal audio analogique, générant ainsi un troisième signal audio analogique ;
mise en oeuvre d'un premier processus de traitement de signal du troisième signal audio analogique, générant ainsi un quatrième signal audio analogique du canal d'effets basse fréquence ;
mise en oeuvre d'un deuxième processus de traitement de signal du premier signal audio analogique, générant ainsi un cinquième signal audio analogique du canal L ; et
mise en oeuvre d'un troisième processus de traitement de signal du deuxième signal audio analogique, générant ainsi un sixième signal audio analogique du canal R.

20. Programme pour faire en sorte qu'un ordinateur exécute un traitement de signaux pour convertir un signal audio numérique en un signal audio analogique, le traitement de signaux comprenant les étapes de :
décodage d'un signal de flux de façon à générer un signal audio numérique d'un canal d'effets basse fréquence et des signaux audio numériques d'un premier à un n^{ème} (n≥2) canaux, dans lequel le signal de flux inclut des informations d'un canal d'effets basse fréquence, les informations contenant une composante basse fréquence, et inclut également des informations du premier au n^{ème} canaux, les informations contenant des composantes de toutes les bandes de fréquences, les premier au n^{ème} canaux ayant différentes positions de source de son ;
ajout du signal audio numérique du canal d'effets basse fréquence et du signal audio numérique d'un canal spécifié parmi les premier au n^{ème} canaux, générant ainsi un signal d'addition ;
conversion des signaux audio numériques des premier au n^{ème} canaux, à l'exclusion du signal audio numérique du canal spécifié, et du signal d'addition en n types de signaux audio analogiques ;
mise en oeuvre d'un premier processus de traitement de signal du signal audio analogique obtenu en résultat de la conversion N/A du signal d'addition, générant ainsi un signal audio analogique du canal d'effets basse fréquence ; et
mise en oeuvre d'un deuxième processus de traitement de signal du signal audio analogique obtenu en résultat de la conversion N/A du signal d'addition, générant ainsi un signal audio analogique du canal spécifié.

21. Programme pour faire en sorte qu'un ordinateur exécute un traitement de signaux pour convertir un signal audio numérique en un signal audio analogique, le traitement de signaux comprenant les étapes de :
décodage d'un signal de flux de façon à générer un signal audio numérique d'un canal d'effets basse fréquence et des signaux audio numériques d'un premier à un n^{ème} (n≥2) canaux, dans lequel le signal de flux inclut des informations d'un canal d'effets basse fréquence, les informations contenant une composante basse fréquence, et inclut également des informations du premier au n^{ème} canaux, les informations contenant des composantes de toutes les bandes de fréquences, les premier au n^{ème} canaux ayant différentes positions de source de son ;
abaissement des signaux audio numériques des premier au n^{ème} canaux en un signal audio numérique d'un canal L et un signal audio numérique d'un canal R ;
addition du signal audio numérique du canal d'effets basse fréquence et du signal audio numérique du canal L, générant ainsi un premier signal d'addition ;
addition du signal audio numérique du canal d'effets basse fréquence et du signal audio numérique du canal R, générant ainsi un deuxième signal d'addition ;
conversion du premier signal d'addition en un premier signal audio analogique ;
conversion du deuxième signal d'addition en un deuxième signal audio analogique ;
addition du premier signal audio analogique et du deuxième signal audio analogique, générant ainsi un troisième signal audio analogique ;
mise en oeuvre d'un premier processus de traitement de signal du troisième signal audio analogique, générant ainsi un quatrième signal audio analogique du canal d'effets basse fréquence ;
mise en oeuvre d'un deuxième processus de traitement de signal du premier signal audio analogique, générant ainsi un cinquième signal audio analogique du canal L ; et
mise en oeuvre d'un troisième processus de traitement de signal du deuxième signal audio analogique, générant ainsi un sixième signal audio analogique du canal R.

22. Support d'enregistrement lisible par ordinateur ayant un programme, enregistré sur celui-ci, pour faire en sorte qu'un ordinateur exécute un traitement de signaux pour convertir un signal audio numérique en un signal audio analogique, le traitement de signaux comprenant les étapes de :
décodage d'un signal de flux de façon à générer un signal audio numérique d'un canal d'effets basse fréquence et des signaux audio numériques d'un premier à un n^{ème} (n≥2) canaux, dans lequel le signal de flux inclut des informations d'un canal d'effets basse fréquence, les informations contenant une composante basse fréquence, et inclut également des informations du premier au n^{ème} canaux, les informations contenant des composantes de toutes les bandes de fréquences, les premier au n^{ème} canaux ayant différentes positions de source de son ;
ajout du signal audio numérique du canal d'effets basse fréquence et du signal audio numérique d'un canal spécifié parmi les premier au n^{ème} canaux, générant ainsi un signal d'addition ;
conversion des signaux audio numériques des premier au n^{ème} canaux, à l'exclusion du signal audio numérique du canal spécifié, et du signal d'addition en n types de signaux audio analogiques ;
mise en oeuvre d'un premier processus de traitement de signal du signal audio analogique obtenu en résultat de la conversion N/A du signal d'addition, générant ainsi un signal audio analogique du canal d'effets basse fréquence ; et
mise en oeuvre d'un deuxième processus de traitement de signal du signal audio analogique obtenu en résultat de la conversion N/A du signal d'addition, générant ainsi un signal audio analogique du canal spécifié.

23. Support d'enregistrement lisible par ordinateur ayant un programme, enregistré sur celui-ci, pour faire en sorte qu'un ordinateur exécute un traitement de signaux pour convertir un signal audio numérique en un signal audio analogique, le traitement de signaux comprenant les étapes de :
décodage d'un signal de flux de façon à générer un signal audio numérique d'un canal d'effets basse fréquence et des signaux audio numériques d'un premier à un n^{ème} (n≥2) canaux, dans lequel le signal de flux inclut des informations d'un canal d'effets basse fréquence, les informations contenant une composante basse fréquence, et inclut également des informations du premier au n^{ème} canaux, les informations contenant des composantes de toutes les bandes de fréquences, les premier au n^{ème} canaux ayant différentes positions de source de son ;
abaissement des signaux audio numériques des premier au n^{ème} canaux en un signal audio numérique d'un canal L et un signal audio numérique d'un canal R ;
addition du signal audio numérique du canal d'effets basse fréquence et du signal audio numérique du canal L, générant ainsi un premier signal d'addition ;
addition du signal audio numérique du canal d'effets basse fréquence et du signal audio numérique du canal R, générant ainsi un deuxième signal d'addition ;
conversion du premier signal d'addition en un premier signal audio analogique ;
conversion du deuxième signal d'addition en un deuxième signal audio analogique ;
addition du premier signal audio analogique et du deuxième signal audio analogique, générant ainsi un troisième signal audio analogique ;
mise en oeuvre d'un premier processus de traitement de signal du troisième signal audio analogique, générant ainsi un quatrième signal audio analogique du canal d'effets basse fréquence ;
mise en oeuvre d'un deuxième processus de traitement de signal du premier signal audio analogique, générant ainsi un cinquième signal audio analogique du canal L ; et
mise en oeuvre d'un troisième processus de traitement de signal du deuxième signal audio analogique, générant ainsi un sixième signal audio analogique du canal R.
